# EUROPÄISCHE PATENTSCHRIFT

(11) **EP 2 295 234 B1**
(45) Veröffentlichungstag und Bekanntmachung des Hinweises auf die Patenterteilung: **08.08.2012**
(21) Anmeldenummer: 10008330.2
(22) Anmeldetag: 10.08.2010
(51) Int. Cl.: B32B 3/18, B42D 15/00, D21H 21/42

(54) **Folienverbundbanknote und Verfahren zu ihrer Herstellung**
Film compound bank note and method for its production
Billet de banque en film composite et son procédé de fabrication

(30) Priorität: 12.08.2009 DE 102009037236
(43) Veröffentlichungstag der Anmeldung: 16.03.2011
(73) Patentinhaber: Giesecke & Devrient GmbH, 81677 München (DE)
(72) Erfinder: Burchard, Theodor, Dr., 83703 Gmund/Tegernsee (DE); Krombholz, Markus, Dr., 83607 Holzkirchen (DE); Seidler, Rudolf, Dr., 83703 Gmund (DE); Hoffmüller, Winfried, Dr., 83646 Bad Tölz (DE); Renner, Patrick, Dr., 83677 Reichersbeuern (DE)

(56) Entgegenhaltungen:
- WO-A1-2005/116335

## Beschreibung

Die Erfindung betrifft ein Wertdokument mit einer Kernschicht und zwei Deckschichten, die dieselben Flächenabmessungen wie die Kernschicht besitzen und mit dieser an deren beiden Hauptflächen jeweils vollflächig verklebt sind. Die Kernschicht besteht aus nebeneinander angeordneten Segmenten aus unterschiedlichen Materialien. Das Wertdokument ist insbesondere eine Folienverbundbanknote mit einem transparenten, Sicherheitsmerkmale aufweisenden Bereich. Die Erfindung betrifft auch ein Verfahren zur Herstellung des Wertdokuments bzw. der Folienverbundbanknote und ein zur Herstellung des Wertdokuments bzw. der Folienverbundbanknote geeignetes Kernschichtfolienband-Endlosmaterial.

Wertdokumente im Sinne dieser Erfindung sind Banknoten, Urkunden, Scheckformulare, Aktien, Etiketten zur Produktsicherung sowie Sicherheitspapiere zur Herstellung der eigentlichen Wertdokumente und Folienpatches zur Aufbringung auf Sicherheitspapiere oder Wertdokumente, d. h. im weitesten Sinne sind unter Wertdokumenten Flachmaterialien zu verstehen, die selbst Wertdokumente sind oder zu deren Herstellung oder in sonstiger Weise zur Echtheitskennzeichnung verwendet werden. Die Erfindung wird im Folgenden am Beispiel ihrer bevorzugtesten Ausführungsform, einer Folienverbundbanknote, beschrieben. Dies ist jedoch nicht als beschränkend auszulegen. Vielmehr ist die Erfindung generell auf flächige Wertgegenstände jeglicher Art anwendbar.

Wertdokumente müssen gegen Fälschung geschützt werden. Zu diesem Zweck werden Sicherheitselemente vorgesehen, wie Sicherheitsfäden, Sicherheitsbänder, Patches oder Etiketten, die Sicherheitsmerkmale aufweisen, wie Hologramme, lumineszierende Darstellungen, Metallisierungen oder andere Merkmale, die visuell oder maschinell nachweisbar sind. Alternativ werden die Sicherheitsmerkmale auch unmittelbar ins Substrat des Wertdokuments eingebracht oder darauf aufgebracht, beispielsweise Wasserzeichen, Melierfasern, lumineszierende oder nicht lumineszierende Aufdrucke, etc. Die Sicherheitsmerkmale erlauben es einem geübten Betrachter, gegebenenfalls unter Zuhilfenahme geeigneter Überprüfungsgeräte, gefälschte Dokumente weitgehend zuverlässig von echten Dokumenten zu unterscheiden. Bei flüchtiger Betrachtung oder wenn die speziellen Sicherheitsmerkmale eines Wertdokuments dem Betrachter nicht genau bekannt sind, wie das beispielsweise bei Banknoten im normalen Zahlungsverkehr oder bei Fremdwährung typischerweise der Fall ist, können Fälschungen leicht unerkannt bleiben. Ein besonderes Problem stellen die modernen Farbkopierer dar, die Wertdokumente, wie beispielsweise Banknoten, in erstaunlicher Qualität kopieren. Die Kopierer weisen zwar systeminterne Sicherungen auf, die ein Kopieren von Banknoten verhindern sollen, aber diese Sicherungen sind durchaus umgehbar.

Daher wurde versucht, Wertdokumente mit Sicherheitsmerkmalen auszustatten, die nicht kopierbar sind und deren Fälschung auch einem ungeübten oder flüchtigen Betrachter auffällt. Es wurde begonnen, Wertdokumente mit durchgehenden Öffnungen zu versehen, die mit einem transparenten Material verschlossen werden. Wird ein derartiges Wertdokument kopiert, erscheint der transparente Bereich in der Kopie in der Farbe des Hintergrunds. Um ein gefälschtes Wertdokument mit einem transparenten Bereich zu erhalten, muss ein Fälscher den betreffenden Bereich ausschneiden und neu mit einem transparenten Material verschließen. Dies ist schwierig, insbesondere dann, wenn zusätzliche Sicherheitsmerkmale vorgesehen sind, die sich sowohl über den transparenten Bereich als auch über angrenzende, nicht transparente Bereiche erstrecken. Zur Erzeugung transparenter Bereiche in Wertdokumenten ist eine Reihe von Möglichkeiten bekannt.

EP 1 545 902 B1 offenbart ein Wertdokument wie eine Verbundbanknote, die ein Basispapier mit einer durchgehenden Öffnung aufweist. Auf das Basispapier mit der durchgehenden Öffnung sind an beiden Oberflächen transparente Folien mittels Klebstoff aufkaschiert. Der Klebstoff ist ebenfalls transparent und verschließt die Öffnung, indem er in sie hineinfließt und sie auffüllt. Die beiden Deckfolien werden also durch den Klebstoff direkt miteinander verbunden. Dies ist im Hinblick auf die Stabilität der Folienverbundbanknote nicht unproblematisch, da bei einer derartigen Banknote das Basispapier eine Trägerfunktion wahrnimmt, während die Deckfolien vergleichsweise dünn sind und nur wenig zur Stabilität der Banknote beitragen. Eine Füllung mit Klebstoff kommt daher nur für kleine transparente Bereiche infrage. Außerdem ist es bei dieser Variante nicht möglich, die durchgehende Öffnung in dem Basispapier für zusätzliche Sicherheitselemente, beispielsweise Sicherheitsbänder, zu nutzen.

Aus WO 2005/116335 A1 ist ein Verfahren zur Herstellung von Sicherheitspapier mit mindestens einem transparenten Bereich für Wertdokumente bekannt. Das Sicherheitspapier besteht aus mindestens einer Lage aus im Wesentlichen nicht transparentem Material, das eine Öffnung aufweist. Die Öffnung wird zunächst einseitig durch eine transparente Abdecklage, insbesondere eine Folie, verschlossen und anschließend durch Extrusionsbeschichten mit einer transparenten Füllung gefüllt.

Eine weitere Möglichkeit, Wertdokumente, wie Verbundbanknoten, mit einem transparenten Bereich herzustellen, besteht darin, bei einem Basispapier mit einer durchgehenden Öffnung diese Öffnung durch eine transparente Folie in Kombination mit einer transparenten Füllung, wie eines Patches, zu füllen und zu verschließen, und außerdem an beiden Oberflächen des Basispapiers eine transparente Beschichtung vorzusehen.

Diese Sicherheitspapiere und Wertdokumente haben gemeinsam, dass zuerst in einem Basispapier ein Loch erzeugt wird, beispielsweise bereits bei der Papierherstellung oder durch Stanzen oder Laserschneiden des fertigen Papiers. Wegen der Trägerfunktion des Basispapiers ist ein Stabilitätsverlust durch Löcher in dem Basispapier unvermeidbar, und es können nur kleine durchgehende Öffnungen ohne Stabilitätsverlust realisiert werden. Die durch das Basispapier hindurchgehenden Öffnungen müssen zusätzlich verschlossen werden. Erfolgt das Verschließen durch eine aufgesiegelte Folie, so ist dies optisch unbefriedigend, denn dabei entsteht für einen Betrachter der Eindruck eines aufgeklebten Tesastreifens. Zusätzlich wird in den Bereichen, in denen die Abdeckfolie nicht unmittelbar über der Öffnung, sondern über den angrenzenden Bereichen des Basispapiers liegt, eine Verdickung geschaffen. Es ist zwar möglich, die Dicke des Basispapiers in den Bereichen, in denen die Abdeckfolie aufliegt, zu vermindern, beispielsweise durch Komprimieren des fertigen Basispapiers oder durch Behinderung der Blattbildung bei der Herstellung des Basispapiers, aber eine gleichmäßige Dicke kann dennoch nicht erreicht werden. Vor allem kann dann keine gleichmäßige Dicke erreicht werden, wenn die Abdeckfolien gleichzeitig als Sicherheitselemente genutzt werden sollen. Die Sicherheitselemente weisen oft eine Dicke auf, die erheblich über den Abmessungen liegt, die durch Komprimieren, Verhinderung der Blattbildung oder Kalandrieren ausgeglichen werden können. Sicherheitsmerkmale, die eine relativ hohe Dicke des Sicherheitselements bedingen, sind beispielsweise Volumenhologramme und mikrooptische Systeme. Werden derartige Sicherheitselemente in dem transparenten Bereich vorgesehen, ergeben sich Dickenunterschiede, und durch die Asymmetrie des Aufbaus neigt das Wertdokument dazu, sich zu biegen oder sogar aufzurollen.

EP 1141480 B1 offenbart ein Sicherheitspapier, bei dem ein transparenter Folienstreifen, beispielsweise ein Sicherheitselement, bereits bei der Papierherstellung in das Papier eingebettet wird. Um eine einigermaßen sichere Einbettung des Folienstreifens im Papiersubstrat ohne Gefahr des Ausbrechens zu gewährleisten, muss das Papier erheblich dicker sein als der Folienstreifen selbst. Durch die unterschiedlichen Dicken können die Wertdokumente schwer gestapelt werden. Außerdem kann es, wenn eine einfache Folie Papier ersetzt, leicht zu Faltenbildung und mangelnder Stabilität im Folienbereich kommen. Ein weiteres Problem ist, dass bei einer Einbettung im Zuge der Papierherstellung keine empfindlichen Sicherheitselemente als einzubettender Folienstreifen verwendet werden können, da die Gefahr einer Beschädigung der Sicherheitsmerkmale besteht.

Eine weitere Möglichkeit, Wertdokumente mit transparenten Bereichen herzustellen, besteht darin, die Wertdokumente vollständig aus transparenten Materialien, wie Kunststofffolien, herzustellen und anschließend auf den Bereichen, die nicht transparent sein sollen, eine opake Beschichtung aufzubringen. Beispielsweise werden bei Folienbanknoten durchgehende Öffnungen durch Aussparen der Druckannahmeschicht simuliert. Das Simulieren von durchgehenden Öffnungen hat gegenüber physisch vorhandenen durchgehenden Öffnungen den Vorteil, dass das gesamte Wertdokument eine gleichbleibende Stabilität und, was das Substrat an sich betrifft, auch eine gleichbleibende Dicke aufweist. Wenn zusätzliche Sicherheitselemente in Form von Folienstreifen aufgebracht werden, ergeben sich hier jedoch besonders ausgeprägte Dickenunterschiede, da die Dicke des Sicherheitselements nicht in irgendeiner Weise durch Einbettung in das Substratmaterial ausgeglichen werden kann. Vielmehr wird die Dicke des Wertdokuments an der Applikationsstelle um die volle Dicke des Sicherheitselements erhöht. Das führt dazu, dass Banknoten oder sonstige Wertdokumente, die Sicherheitselemente in Form von zusätzlich aufgebrachten Folienstreifen aufweisen, wenn sie zur Aufbewahrung gestapelt oder gerollt werden, inakzeptabel deformierte Stapel bzw. Rollen ergeben.

Aufgabe der vorliegenden Erfindung ist es daher, ein Wertdokument und insbesondere eine Banknote bereitzustellen, bei der die Nachteile des Stands der Technik vermieden oder zumindest verringert werden.

Aufgabe der Erfindung ist es auch, eine Banknote oder ein anderes Wertdokument bereitzustellen, in die ein zusätzliches Element, wie ein Sicherheitselement, integriert ist, wobei Stabilitätsprobleme oder durch Dickenunterschiede bedingte Probleme, wie schlechte Stapelbarkeit oder schlechte Planlage, vermieden werden.

Aufgabe der Erfindung ist es ferner, eine Banknote oder ein anderes Wertdokument bereitzustellen, bei der das integrierte Element eine Dicke aufweist, die größenordnungsmäßig der Dicke der Banknote entspricht.

Aufgabe der Erfindung ist es darüber hinaus, eine Banknote oder ein anderes Wertdokument bereitzustellen, die einen transparenten oder zumindest transluzenten Bereich aufweist, der großflächig ausgebildet sein kann.

Aufgabe der Erfindung ist es insbesondere, eine Banknote oder ein anderes Wertdokument bereitzustellen, die einen transparenten oder zumindest transluzenten Bereich aufweist, in dem Sicherheitsmerkmale integriert sind. Es sollen Sicherheitsmerkmale integriert werden können, die eine hohe Dicke des Sicherheitselements erfordern, wie beispielsweise mikrooptische Systeme.

Eine weitere Aufgabe der Erfindung ist es, ein Verfahren zur Herstellung einer derartigen Banknote oder allgemein eines derartigen Wertdokuments bereitzustellen.

Aufgabe der Erfindung ist es auch, ein zur Herstellung eines derartigen Wertdokuments geeignetes Sicherheitselementmaterial bereitzustellen.

Die Aufgaben werden gelöst durch das Wertdokument, das Verfahren zur Herstellung eines Wertdokuments sowie das Kernschichtfolien-Endlosmaterial mit den Merkmalen, wie sie in den unabhängigen Ansprüchen angegeben sind. Weiterbildungen der Erfindung sind in den jeweiligen abhängigen Ansprüchen angegeben.

Ein erster Aspekt der Erfindung betrifft ein Wertdokument aufweisend
eine Kernschicht mit zwei Hauptflächen,
eine erste Deckschicht und eine erste Klebstoffschicht, die die erste Deckschicht vollflächig mit der ersten Hauptfläche der Kernschicht verklebt,
eine zweite Deckschicht und eine zweite Klebstoffschicht, die die zweite Deckschicht vollflächig mit der zweiten Hauptfläche der Kernschicht verklebt, wobei
die Kernschicht aus Segmenten aus mindestens einem ersten Kernschichtmaterial und mindestens einem davon verschiedenen zweiten Kernschichtmaterial besteht, die in Flächenrichtung des Wertdokuments dergestalt nebeneinander angeordnet sind, dass sie sich jeweils über die gesamte Länge oder die gesamte Breite des Wertdokuments erstrecken und aneinander angrenzen ohne einander zu überlappen.

In einer bevorzugten Ausgestaltung sind die erste und/ oder die zweite Deckschicht und die sie mit einer Hauptfläche der Kernschicht verklebende erste und/oder zweite Klebstoffschicht transparent oder zumindest transluzent.

In einer bevorzugten Ausgestaltung weist die Kernschicht mindestens ein Segment auf, das aus einem transparenten oder zumindest transluzenten Kunststofffolienband besteht, an das Segmente auf der Basis von Papier angrenzen. Insbesondere ist das mindestens eine Segment, das aus einem transparenten oder zumindest transluzenten Kunststofffolienband besteht, das Segment aus dem zweiten Kernschichtmaterial, und die Segmente auf der Basis von Papier sind die Segmente aus dem ersten Kernschichtmaterial.

In einer bevorzugten Ausgestaltung ist das Wertdokument eine Folienverbundbanknote, bei der
die Kernschicht mindestens ein Segment aufweist, das aus einem zumindest bereichsweise transparenten oder zumindest transluzenten Kunststofffolienband besteht, an das zwei Segmente auf der Basis von Papier angrenzen,
die erste und die zweite Deckschicht transparente oder zumindest transluzente Kunststofffolien sind, und
die erste und die zweite Klebstoffschicht transparent oder zumindest transluzent sind.

In einer bevorzugten Ausgestaltung ist mindestens eines der Segmente der Kernschicht, bevorzugt ein Segment aus zweitem Kernschichtmaterial, als ein Sicherheitselement mit Sicherheitsmerkmalen ausgebildet.

In einer bevorzugten Ausgestaltung ist mindestens eines der Segmente der Kernschicht als ein Sicherheitselement mit ersten Komponenten eines Sicherheitsmerkmals ausgebildet, und die erste und / oder die zweite Deckschicht ist mit zweiten und gegebenenfalls weiteren Komponenten des Sicherheitsmerkmals ausgebildet oder ausgestattet, wobei die erste und die zweite und gegebenenfalls die weiteren Komponenten gemeinsam das Sicherheitsmerkmal bilden.

In einer bevorzugten Ausgestaltung ist das Segment aus dem zweiten Kernschichtmaterial als ein Sicherheitselement mit optisch variablen Sicherheitsmerkmalen, bevorzugt mikrooptischen Sicherheitsmerkmalen, ausgebildet.

In einer bevorzugten Ausgestaltung weist das Wertdokument mindestens eine weitere Schicht auf, die als Funktionsschicht und/oder als Hilfsschicht ausgebildet ist.

In einer bevorzugten Ausgestaltung sind die Segmente an den Rändern des Wertdokuments, insbesondere an den Kanten und/ oder Ecken des Wertdokuments, angeordnet.

Ein zweiter Aspekt der Erfindung betrifft ein Verfahren zur Herstellung eines Wertdokuments, aufweisend eine Kernschicht mit zwei Hauptflächen, eine erste Deckschicht und eine erste Klebstoffschicht, die die erste Deckschicht vollflächig mit der ersten Hauptfläche der Kernschicht verklebt, eine zweite Deckschicht und eine zweite Klebstoffschicht, die die zweite Deckschicht vollflächig mit der zweiten Hauptfläche der Kernschicht verklebt, folgende Schritte aufweisend:
Bereitstellen eines flächigen ersten Deckschichtmaterials für die erste Deckschicht und Auftragen eines ersten Klebstoffs für die erste Klebstoffschicht auf das erste Deckschichtmaterial,
Bereitstellen eines flächigen ersten Kernschichtmaterials, bevorzugt in den Flächenabmessungen des ersten Deckschichtmaterials, und mindestens eines bandförmigen zweiten Kernschichtmaterials, das von dem ersten Kernschichtmaterial verschieden ist,
Zusammenführen des ersten Kernschichtmaterials, des zweiten Kernschichtmaterials und des mit dem ersten Klebstoff beschichteten ersten Deckschichtmaterials dergestalt, dass das zweite Kernschichtmaterial zwischen dem ersten Kernschichtmaterial und dem ersten Klebstoff eingeschlossen wird und das erste Kernschichtmaterial und das zweite Kernschichtmaterial mit dem ersten Deckschichtmaterial verklebt werden,
Abtrennen des ersten Kernschichtmaterials mindestens in den Bereichen, in denen es das zweite Kernschichtmaterial überlappt, so dass eine Oberfläche des zweiten Kernschichtmaterials, nicht aber die erste Klebstoffschicht, freigelegt wird, und die Kernschicht gebildet wird, die aus Segmenten aus dem ersten Kernschichtmaterial und mindestens einem Segment aus dem mindestens einen zweiten Kernschichtmaterial zusammengesetzt ist,
Bereitstellen eines flächigen zweiten Deckschichtmaterials, bevorzugt in den Flächenabmessungen des ersten Deckschichtmaterials, für die zweite Deckschicht,
Auftragen eines zweiten Klebstoffs für die zweite Klebstoffschicht auf das zweite Deckschichtmaterial oder auf die nicht mit dem ersten Deckschichtmaterial verklebte Hauptfläche der Kernschicht, und
Verkleben der Kernschicht mit dem zweiten Deckschichtmaterial mittels des zweiten Klebstoffs.

In einer bevorzugten Ausgestaltung erfolgt das Abtrennen des ersten Kernschichtmaterials durch Abschneiden mit Schneidwerkzeugen, bevorzugt Messern, die so eingestellt sind, dass sie beim Schneiden auf die beiden entgegengesetzten Seitenflächen des zweiten Kernschichtmaterials auftreffen. In einer bevorzugten Ausgestaltung wird die Neigung der Schneidwerkzeuge so eingestellt, dass die Schneidwerkzeuge mit einer zur ersten Deckschicht parallelen Ebene einen spitzen Winkel zwischen 0° und 30° bilden.

In einer bevorzugten Ausgestaltung erfolgt das Einstellen der Schneidwerkzeuge durch optisches oder mechanisches Erfassen der Lage des zweiten Kernschichtmaterials und Ansteuerung der Schneidwerkzeuge entsprechend der ermittelten Lage.

In einer bevorzugten Ausgestaltung erfolgt das Abtrennen des ersten Kernschichtmaterials durch Abschleifen oder Abfräsen bis zur Freilegung der Oberfläche des zweiten Kernschichtmaterials.

Ein dritter Aspekt der Erfindung betrifft ein Kernschichtfolienband-Endlosmaterial, das für die Herstellung des vorstehend erwähnten Wertdokuments konfektioniert ist.

Die Struktur bzw. der Aufbau des erfindungsgemäßen Wertdokuments ist eine unmittelbare Folge des erfindungsgemäßen Herstellungsverfahrens des Wertdokuments. Das erfindungsgemäße Herstellungsverfahren ermöglicht es, in die Kernschicht eines Wertdokuments bandförmige Elemente aus einem von dem Kernschichtmaterial verschiedenen Material zu integrieren, wobei die bandförmigen Elemente nahezu die gleiche Dicke wie die Kernschicht aufweisen. Die Kernschicht setzt sich aus mindestens zwei verschiedenen Kernschichtmaterialien zusammen, wobei die Materialien nebeneinander angeordnete Segmente bilden, die eine vergleichbare Dicke aufweisen und aneinander angrenzen, ohne einander zu überlappen.

Das erfindungsgemäße Verfahren wird wie folgt durchgeführt:
Zur Herstellung einer Folienverbundbanknote wird zunächst eine Kunststofffolie mit einem Kaschierklebstoff beschichtet. Auf die beschichtete Kunststofffolie, die später eine Deckschicht bildet, wird ein Papierbogen oder eine Papierbahn aufkaschiert, wobei dieses Papier eines der Materialien der späteren Kernschicht oder Innenschicht darstellt. Bei diesem Kaschierschritt lässt man gleichzeitig mit dem Papier ein bandförmiges Kunststofffolienmaterial in den Kaschierspalt einlaufen, wobei dieses Kunststofffolienband ebenfalls eines der Materialien der späteren Kernschicht bzw. Innenschicht der Folienverbundbanknote darstellt. Bei diesem ersten Kaschierschritt wird die Deckschicht-Kunststofffolie vollflächig und unmittelbar mit dem Kunststofffolienband und der Papierschicht verklebt. In den Bereichen, in denen sich zwischen Deckschicht-Kunststofffolie und Kernschichtpapier das Kunststofffolienband befindet, findet natürlich keine Verklebung zwischen Deckschicht-Kunststofffolie und Kernschichtpapier statt. Zwischen dem Kunststofffolienband und dem Kernschichtpapier findet mangels Klebstoff ebenfalls keine Verklebung statt. Der nun erhaltene Verbund weist einen bandförmigen Bereich auf, in dem die Papierschicht deutlich über die übrigen Bereiche der Papierschicht übersteht, nämlich den Bereich, in dem sie über dem Kunststofffolienband liegt. Dieser über dem Kunststofffolienband liegende Bereich der Papierschicht wird nun abgetrennt, so dass die darunterliegende Oberfläche des Kunststofffolienbands exponiert wird. Nach dem Abtrennen der überstehenden Bereiche der Papierschicht bilden die Oberfläche der verbleibenden Papierschicht und die Oberfläche des Kunststofffolienbands gemeinsam eine im Wesentlichen ebene Kernschicht-oberfläche.

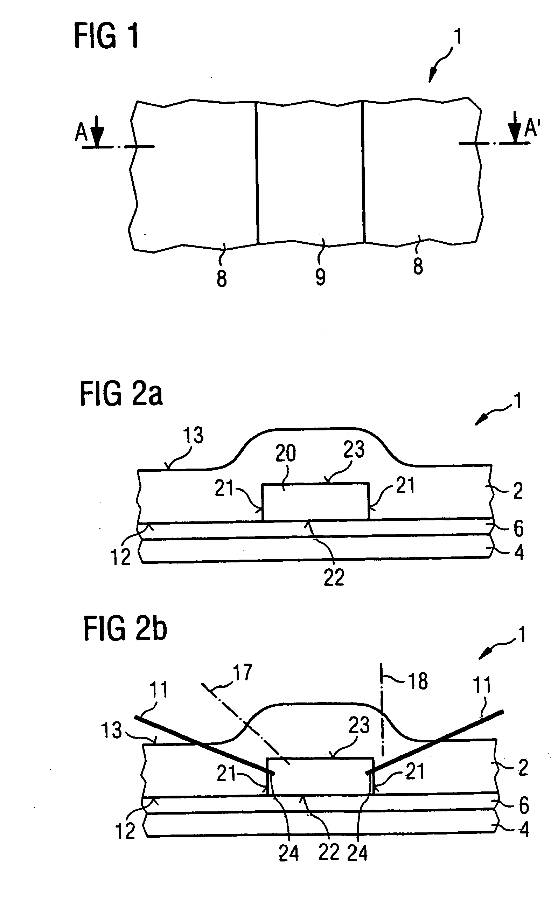

Die Vorgehensweise beim Abtrennen der überstehenden Papierschicht wird im Zusammenhang mit Figur 2b näher erläutert.

Anschließend wird eine weitere Kunststofffolie als zweite Deckschicht aufkaschiert. Dazu wird entweder die Deckschicht-Kunststofffolie oder die exponierte Oberfläche der Kernschicht mit einem Kaschierklebstoff beschichtet, und dann in einem zweiten Kaschierschritt die zweite Deckschicht-Folienbahn auf die Oberfläche der Kernschicht aufkaschiert und unmittelbar verklebt. Man erhält Folienverbundbanknoten in Form eines Folienverbundbanknoten-Endlosmaterials oder in Form eines Folienverbundbanknoten-Bogens mit jeweils einer Vielzahl von Einzelnutzen. Prinzipiell ist es natürlich auch möglich, die Folienverbundbanknoten einzeln herzustellen.

Die Papierschicht für die Kernschicht, im Folgenden "Basispapier" genannt, kann einlagig ausgebildet sein oder aus zwei oder mehr Lagen bestehen. Eine mehrlagige Ausbildung des Papiers kann insofern vorteilhaft sein, als auf diese Weise problemlos ein Basispapier mit bereichsweise unterschiedlichen Eigenschaften erhalten werden kann. Beispielsweise kann eine der Lagen in ihrem Volumen mit Lumineszenzpigmenten einer bestimmten Farbe ausgestattet werden, während die entgegengesetzte Papierlage in ihrem Volumen mit Lumineszenzpigmenten einer anderen Farbe ausgestattet wird, so dass das Basispapier bei Betrachtung von unterschiedlichen Seiten her in verschiedenen Farben luminesziert.

Hinsichtlich der Art des Papiers gibt es keine speziellen Beschränkungen. Banknotenpapiere werden typischerweise aus Fasern von Einjahrespflanzen, insbesondere Baumwollfasern oder Zellstofffasern, hergestellt, aber es können auch Papiere verwendet werden, die zumindest teilweise aus Kunststofffasern bestehen, vorzugsweise aus Polyamidfasern oder Polyesterfasern. Besonders bevorzugt wird ein Baumwollpapier als Basispapier verwendet. Das Flächengewicht des Basispapiers variiert je nach Anwendungsform. Übliche Flächengewichte liegen im Bereich von 50 g/m² bis 100 g/m², vorzugsweise im Bereich von 60 g/m² bis 90 g/m², besonders bevorzugt bei etwa 70 g/m². Bei mehrlagigen Basispapieren können die einzelnen Papierlagen aus gleichen oder aus unterschiedlichen Papiersorten bestehen. Beispielsweise kann eine Papierlage ein reines Baumwollpapier sein, während eine weitere Papierlage Kunststofffasern aufweisen kann.

Die Folienbänder für die Kernschicht bestehen bevorzugt aus einem Kunststoffmaterial, jedenfalls aus einem anderen Material als das Basispapier. Auch die Folienbänder können einlagig ausgebildet sein oder aus zwei oder mehr gleichen oder verschiedenen Lagen bestehen. Wenn mehrere Folienbänder einkaschiert werden, können diese aus demselben oder aus verschiedenen Materialien bestehen. Bevorzugte Materialien für die Folienbänder sind Polyester, wie Polyethylenterephthalat (PET), und Polyolefine, z. B. Polypropylen, aber auch andere Kunststoffmaterialien sind verwendbar, beispielsweise Folien aus PMMA, Polyamid, Polycarbonat oder aus cycloolefinischen Kohlenwasserstoffen. Für dicke Folienbänder werden bevorzugt weniger steife Materialien verwendet, beispielsweise eher Polypropylen als ein Polyester.

Hinsichtlich der Breite eines Kernschicht-Folienbands gibt es prinzipiell keine besonderen Einschränkungen. Das Folienband kann sich, je nach Laufrichtung, im Wesentlichen über die gesamte Breite oder im Wesentlichen über die gesamte Länge einer Folienverbundbanknote erstrecken, solange es noch von einem "Rand" aus Basispapier eingefasst wird. Typischerweise aber wird ein Folienband weniger Fläche einnehmen als das Basispapier, das an das Folienband angrenzt. Wenn die Kernschicht aus dem Basispapier und mehreren Kernschicht-Folienbändern besteht, wird das einzelne Folienband noch schmäler sein, wobei sich die Folienbänder hinsichtlich ihrer Breite und Dicke unterscheiden können. Typischerweise nehmen alle Folienbänder gemeinsam maximal soviel Fläche ein, wie das Basispapier.

Mit Vorteil sind die Segmente, die aus mindestens einem ersten Kernschichtmaterial, z.B. Papier, und mindestens einem davon verschiedenen zweiten Kernschichtmaterial, z.B. transparentes oder zumindest transluzentes Kunststofffolienband, bestehen, an den Rändern des Wertdokuments, insbesondere an den Kanten und/ oder Ecken des Wertdokuments, angeordnet. Eine solche Anordnung gewährleistet einen zusätzlichen Schutz des Wertdokuments vor einem Aufspalten der das Wertdokument aufbauenden Schichten. Ein solches Aufspalten kann z.B. im Falle eines Banknotenumlaufs durch Abgriff erfolgen. Ein Aufspalten kann aber auch bewusst in Fälschungsangriffen durch Einwirkung von organischen und/oder wässrigen Lösungsmitteln, ggf. in Verbindung mit Hilfsstoffen, induziert werden. Besonders bevorzugt wird in diesem Zusammenhang eine Anordnung, bei der das Wertdokument an seinen Rändern durch jeweils ein Segment aus zweitem Kernschichtmaterial, z.B. transparentes oder zumindest transluzentes Kunststofffolienband, versiegelt ist. Insbesondere wird bevorzugt, dass das Wertdokument an zwei, weiter bevorzugt an allen Kanten durch jeweils ein Segment aus zweitem Kernschichtmaterial, z.B. transparentes oder zumindest transluzentes Kunststofffolienband, versiegelt ist.

Die Kernschicht weist zwei Oberflächen bzw. Hauptflächen auf, die sich jeweils aus den Oberflächen von Basispapier und Kernschicht-Folienband (bzw. Kernschicht-Folienbändern) zusammensetzen. Daraus ergibt sich unmittelbar, dass es sinnvoll ist, die Dicken von Basispapier und Folienband bzw. Folienbändern aneinander anzupassen. Eine exakte Übereinstimmung der Dicken ist nicht erforderlich. Vielmehr können die Kernschicht-Folienbänder auch etwas dicker oder dünner als das Basispapier sein. Als ungefähren Richtwert kann man angeben, dass ein Basispapier gewählt werden sollte, dessen Dicke der Dicke des Kernschicht-Folienbands plus/minus 20% entspricht. Größere Abweichungen in der Dicke können zwar grundsätzlich ausgeglichen werden, dies ist jedoch nicht bevorzugt.

Die Kernschicht-Folienbänder können, wie das Basispapier, einlagig oder mehrlagig ausgebildet sein. Es kann sich beispielsweise um Verbundfolien aus verschiedenen Materialien handeln, die unter anderem auch Sicherheitsmerkmale enthalten können. Bevorzugt ist das Grundmaterial eines derartigen Folienbands transparent, da transparente Bereiche einen guten Schutz gegen Fälschung durch moderne Farbkopierer darstellen. Wenn das Folienband Sicherheitsmerkmale enthält, handelt es sich dabei bevorzugt ebenfalls um nicht kopierbare Merkmale, beispielsweise Merkmale mit Farbkippeffekten, aber dies ist nicht zwingend erforderlich. Interessante Effekte lassen sich beispielsweise auch erzielen, wenn man ein breites, transparentes Folienband verwendet und dieses Folienband oder eine oder beide Deckschichten geeignet bedruckt. Beispielsweise kann man das Folienband oder die Folienverbundbanknoten-Deckschichten über dem Folienband vollflächig bedrucken, wobei man jedoch mehrere kleinere Flächen ausspart. In den ausgesparten Bereichen ist die Folienverbundbanknote dann transparent, und es werden mehrere durchgehende und mit einer transparenten Folie verschlossene Fenster vorgetäuscht. Eine andere Möglichkeit besteht beispielsweise darin, einen Aufdruck aufzubringen, der einen schräg über das Folienband verlaufenden Streifen frei lässt, der dann transparent bleibt und den Eindruck erweckt, als hätte die Folienverbundbanknote einen schräg verlaufenden transparenten Einsatz.

Unter transparent ist eine Lichtdurchlässigkeit von mindestens 90 % des auftreffenden Lichtes zu verstehen, unter transluzent eine Lichtdurchlässigkeit von unter 90 %, vorzugsweise zwischen 80 % und 20 %. Eine im Wesentlichen opake Schicht hat im Sinne dieser Erfindung eine Lichtdurchlässigkeit von weniger als 20 %.

Der Aufbau der Folienverbundbanknote bzw. allgemein des Wertdokuments kann auch invers vorliegen. Das bedeutet, dass anstelle des "Basispapiers" eine "Basisfolie" aus einem Kunststoffmaterial verwendet wird, wobei zwischen die Deckschicht-Kunststofffolie und die Kernschicht-Kunststofffolie Papierstreifen einkaschiert werden. Diese Papierstreifen können, wie bei der oben genannten Ausführungsform, einlagig oder mehrlagig sein und gegebenenfalls Sicherheitsmerkmale aufweisen, beispielsweise Wasserzeichen, Melierfasern, Fluoreszenzpigmente oder dergleichen.

Als Material für die Deckschichten kommt in erster Linie Papier oder Kunststoff infrage. Bevorzugt bestehen die beiden Deckschichten aus Kunststofffolien, wobei die Folien gleich oder verschieden sein können. Besonders bevorzugt sind Folien aus Polyester, wie Polyethylenterephthalat (PET), und Folien aus orientiertem Polypropylen (OPP). Es sind jedoch auch beliebige andere Kunststofffolien verwendbar. Geeignet sind beispielsweise allgemein Polypropylen, Polyethylen, Polyamid, Polycarbonat und cycloolefinische Copolymere. Je nach Anwendung können die Folien teilweise oder im Wesentlichen vollständig mattiert oder glänzend ausgeführt sein.
Die Deckschichtfolien sind bevorzugt transparent, damit transparente Kernschicht-Folienbänder sichtbar bleiben und Sicherheitsmerkmale unter den Deckschichtfolien erkennbar sind. Die Deckschichtfolien können farblos oder auch gefärbt sein, wobei sich durch geeignete Farbkombinationen interessante Effekte erzeugen lassen. Beispielsweise können Wasserzeichen im Basispapier durch farbige Deckschichtfolien farbig erscheinen.

Bevorzugte Deckschichtfolien-Dicken liegen im Bereich von 1 µm bis 20 µm, besonders bevorzugt von 6 µm bis 15 µm. Im Allgemeinen können die typischen Eigenschaften des Basispapiers, wie Knitterfähigkeit und Faltbarkeit, umso besser zur Geltung kommen, je dünner die Deckschichtfolien sind. Typischerweise, aber nicht zwingend, haben beide Deckschichtfolien die gleiche Dicke.

Die Deckschichtfolien dienen u. a. der Verbesserung der mechanischen Festigkeit der Folienverbundbanknote oder des sonstigen Wertdokuments. Um diese weiter zu steigern, insbesondere auch um die Einreißfestigkeit zu verbessern, können die verwendeten Deckschichtfolien eine unterschiedliche Reckung aufweisen. Es versteht sich, dass sie auch mit weiteren Schichten ausgerüstet sein können, insbesondere mit einer ein- oder mehrschichtigen Farbannahmeschicht. Farbannahmeschichten können vollflächig oder bereichsweise vorgesehen werden und verbessern die Haftung der auf die Folien gegebenenfalls aufzubringenden Druckschichten ganz erheblich.

Als Kaschierklebstoff wird vorzugsweise ein lösemittelfreier oder lösemittelhaltiger Kaschierklebstoff verwendet. Denkbar ist auch ein wasserlöslicher (Dispersion) oder ein thermisch aktivierbarer Kaschierklebstoff. Geeignete Klebstoffe sind beispielsweise Polyvinylacetate, Polyvinylchloridderivate, Acrylate, Polyurethane, Polyester, Copolymere dieser Gruppen, oder auch UV-Klebstoffe. Die eingesetzten Mengen an Kaschierklebstoff können in breiten Bereichen variieren, wobei Mengen von etwas 3 g/m² bis 9 g/m² bevorzugt, und 4 g/m² bis 6 g/m² ganz besonders bevorzugt sind. Der Klebstoff kann jedoch auch in sehr viel größeren Mengen verarbeitet werden, ohne die Eigenschaften des Verbundes zu schädigen. Es wird ein fester, untrennbarer Verbund zwischen der Kernschicht, d. h. dem Basispapier, und dem Folienband bzw. den Folienbändern einerseits und der jeweiligen Deckschichtfolie andererseits erzielt. Zur Verklebung mit den beiden Deckschichtfolien können gleiche oder verschiedene Klebstoffe verwendet werden. Verschiedene Klebstoffe können insbesondere dann sinnvoll sein, wenn das Basispapier aus unterschiedlichen Papierlagen besteht und/ oder mit unterschiedlichen Deckschichtfolien verbunden werden soll.

Zur Verbesserung der Haftung können die Deckschichtfolien in bekannter Weise vorbehandelt werden, beispielsweise durch Ätzen, Primern, Coronabehandlung.

Ebenso wie die Deckschichtfolien sind auch die Kaschierklebstoffe bevorzugt transparent oder zumindest transluzent, so dass Sicherheitsmerkmale unter den Deckschichtfolien und der Klebstoffschicht sichtbar bleiben und durch die Kernschicht-Folienbänder erzeugte transparente oder transluzente Bereiche erhalten bleiben.

Transparente bzw. transluzente Bestandteile der Folienverbundbanknote bzw. des sonstigen Wertdokuments, wie Kaschierklebstoff, Deckschichtfolien und Kernschicht-Folienbänder, sind nicht notwendigerweise farblos, sondern können auch gefärbt sein.

Gemäß einer bevorzugten Ausführungsform der vorliegenden Erfindung werden durch die Folienbänder in der Kernschicht nicht nur transparente Bereiche geschaffen, sondern diese Bereiche zusätzlich für Sicherheitselemente genutzt. Wie bereits erwähnt, schaffen transparente oder transluzente Bereiche in Wertdokumenten einen guten Fälschungsschutz gegen das zunehmend beliebter werdende Fälschen mithilfe hochwertiger Farbkopierer, da auch mit dem besten Farbkopierer keine transparenten Bereiche erzeugt werden können. Ebenfalls nicht kopierbar sind optisch variable Sicherheitselemente, die aufgrund von Lichtbeugung oder Lichtinterferenz ein vom Betrachtungswinkel abhängiges Farbspiel zeigen. Sicherheitselemente dieser Art sind beispielsweise Hologramme, Kinegramme oder andere Beugungsstrukturen, Mattstrukturen, folienartige Flüssigkristall- oder Interferenzschichtaufbauten, aber auch Elemente mit Druckfarben, die Interferenzschichtpigmente oder Flüssigkristallpigmente oder andere Effektpigmente, wie glänzende Metalleffektpigmente, enthalten. Durch räumliche Variation des Brechungsindex innerhalb einer Polymerschicht können Polymerhologramme bzw. Volumenhologramme erhalten werden. Weitere Sicherheitsmerkmale dieser Art sind mikrooptische System wie z. B. Moire-Magnifier.

Sicherheitselemente mit Sicherheitsmerkmalen, wie Volumenhologrammen und mikrooptischen Systemen, weisen prinzipbedingt eine erhebliche Dicke auf, da zur Erzielung des optischen Effekts jeweils bestimmte Mindestschichtdicken erforderlich sind. Übliche Dicken liegen bei über 30 µm, typischerweise bei über 45 µm, und teilweise sind auch erhebliche Schichtdicken erforderlich, beispielsweise bis zu 100 µm. Werden Banknoten nach Verfahren des Stands der Technik mit derartigen Sicherheitselementen ausgestattet, weisen sie Dickenunterschiede auf, die dazu führen, dass die Banknoten keine gute Planlage aufweisen, sondern eine gewisse Neigung zum Einrollen zeigen, schwer gestapelt und gerollt werden können, d. h. deformierte Stapel und Rollen bilden, und auch beim automatischen Sortieren Probleme bereiten. Derartige Schwierigkeiten treten nicht auf, wenn die betreffenden Sicherheitselemente nach dem erfindungsgemäßen Verfahren in eine Banknote oder ein sonstiges Wertdokument eingebracht werden. Die vorliegende Erfindung ist daher ganz besonders dazu geeignet, Banknoten und sonstige Wertdokumente mit dicken Sicherheitselementen auszustatten, wobei unter einem "dicken" Sicherheitselement ein Sicherheitselement mit einer Dicke oder Höhe von mindestens 30 µm, insbesondere von mindestens 45 µm, und bevorzugt von mindestens 70 µm, zu verstehen ist. Besonders gut geeignet ist die vorliegende Erfindung auch zur Einbringung von Sicherheitselementen mit flächenmäßig großer Ausdehnung, da bei dem erfindungsgemäßen Verfahren Bandmaterialien in die Kernschicht des Wertdokuments eingebracht werden, die sich zum einen über die gesamte Länge oder Breite des Wertdokuments erstrecken, und die zum anderen auch hinsichtlich ihrer Breite keinen speziellen Einschränkungen unterliegen.

Ein bevorzugtes Anwendungsgebiet der vorliegenden Erfindung sind daher Folienverbundbanknoten mit transparenten oder transluzenten Bereichen, wobei die transparenten oder transluzenten Bereiche gleichzeitig für Sicherheitselemente genutzt werden, die zur Erzielung eines optischen Effekts prinzipbedingt erhebliche Schichtdicken erfordern, wie Volumenhologramme und mikrooptische Systeme. Ganz besonders vorteilhaft sind Kernschicht-Folienbänder, die Sicherheitselemente aufweisen, bei denen sich unterschiedliche optische Effekte beobachten lassen, je nach dem, ob das Sicherheitselement von der Vorderseite oder der Rückseite der Banknote her betrachtet wird. Derartige Sicherheitselemente stehen in Form bestimmter mikrooptischer Systeme zur Verfügung.

Ein für die vorliegende Erfindung besonders geeignetes mikrooptisches Sicherheitsmerkmal sind sogenannte Moiré-Vergrößerungsanordnungen. Eine derartige Moiré-Vergrößerungsanordnung ist in der Druckschrift WO 2006/087138 A1 bzw. in der DE 10 2005 028 162 A1 offenbart. Die prinzipielle Funktionsweise von Moire-Vergrößerungsanordnungen ist in dem Artikel "The Moiré-Magnifier", M. C. Hutley, R. Hunt, R. F. Stevens and T. Savander Pure Appl. Opt. 3 (1994), S. 133-142, beschrieben. Kurz gesagt, Moiré-Vergrößerung bezeichnet ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiré-Muster, wobei in diesem Fall jeder der Moiré-Streifen in Gestalt eines vergrößerten und gedrehten Bildes der wiederholten Elemente des Bildrasters erscheint.

Hinsichtlich der verschiedenen Ausführungsformen der Sicherheitselemente, die für Kernschichtfolien der vorliegenden Erfindung geeignet sind, insbesondere hinsichtlich der Rasteranordnung der fokussierenden Elemente (Mikrolinsen) und der mikroskopischen Strukturen (Motivelemente), hinsichtlich der geometrischen Gestalt der Mikrolinsen und der mikroskopischen Strukturen, hinsichtlich des Aufbaus des Sicherheitselements, d. h. der verwendeten Schichten und Schichtfolgen, und hinsichtlich der erzielten Effekte, wie der Farbeffekte und Bewegungseffekte, wird ausdrücklich auf die WO 2006/087138 A1 Bezug genommen, deren Offenbarungsgehalt diesbezüglich zum Offenbarungsgehalt der vorliegenden Anmeldung gemacht wird. Das Sicherheitselement gemäß der in Bezug genommenen Druckschrift weist ein erstes mikrooptisches Echtheitsmerkmal und ein zweites Echtheitsmerkmal, das maschinell und/oder visuell prüfbar ist, auf. Gemäß der vorliegenden Erfindung können natürlich auch Sicherheitselemente ohne ein derartiges zweites Echtheitsmerkmal verwendet werden, d. h. Sicherheitselemente mit nur einem mikrooptischen Echtheitsmerkmal oder mehreren mikrooptischen Echtheitsmerkmalen, gegebenenfalls in Kombination mit einem weiteren, von dem zweiten Echtheitsmerkmal gemäß der in Bezug genommenen Druckschrift verschiedenen Echtheitsmerkmal.

Die Herstellung der Sicherheitselemente, insbesondere der Mikrolinsen und der mikroskopischen Strukturen, kann ebenfalls mittels der in der WO 2006/087138 A1 offenbarten Techniken erfolgen. Alternativ können die Mikrolinsen und die mikroskopischen Strukturen auch nach dem in der Patentanmeldung WO 2008/000350 A1 offenbarten Verfahren hergestellt werden. Der Offenbarungsgehalt dieser Anmeldungen wird diesbezüglich zum Offenbarungsgehalt der vorliegenden Anmeldung gemacht. Für eine ausführliche Darstellung der Funktionsweise und vorteilhafter Anordnungen der Mikromotivelemente und der Mikrolinsen wird auch auf die Patentanmeldung WO 2007/076952 A2 verwiesen, deren Offenbarungsgehalt insoweit ebenfalls zum Offenbarungsgehalt der vorliegenden Anmeldung gemacht wird.

Weitere für die vorliegende Erfindung besonders geeignete mikrooptische Sicherheitsmerkmale sind in der deutschen Patentanmeldung mit der Anmeldenummer DE 10 2009 022612.5 beschrieben, deren Offenbarungsgehalt hinsichtlich der offenbarten Sicherheitselemente, Sicherheitssysteme, Verfahren zur Herstellung der Sicherheitselemente und Sicherheitssysteme, und der damit erzielbaren Effekte, ebenfalls zum Offenbarungsgehalt der vorliegenden Anmeldung gemacht wird. Die deutsche Patentanmeldung mit der Anmeldenummer DE 10 2009 022612.5 offenbart Sicherheitselemente für Sicherheitspapiere, Wertdokumente oder dergleichen, mit einem eine Oberseite und eine Unterseite aufweisenden Träger, der mehrere flächig in einem ersten Muster angeordnete, reflektive erste Mikroabbildungselemente sowie flächig in einem zweiten Muster angeordnete zweite Mikroabbildungselemente umfasst, einem ersten Mikrostrukturobjekt, das mehrere erste Mikrostrukturen enthält, die in einem so in das erste Muster angepassten ersten Mikrostrukturmuster angeordnet sind, dass das erste Mikrostrukturobjekt mittels der ersten Mikroabbildungselemente vor die Oberseite vergrößert abgebildet wird, und einem zweiten Mikrostrukturobjekt, das mehrere zweite Mikrostrukturen enthält, die in einem so an das zweite Muster angepassten zweiten Mikrostrukturmuster angeordnet sind, dass das zweite Mikrostrukturobjekt mittels der zweiten Mikroabbildungselemente vor die Unterseite vergrößert abgebildet wird.

Die ersten und zweiten Mikroabbildungselemente können relativ zu den Mikrostrukturobjekten auf derselben oder auf verschiedenen Seiten liegen. Außerdem können sowohl die ersten und zweiten Mikroabbildungselemente als auch die ersten und zweiten Mikrostrukturen in derselben oder in verschiedenen Ebenen liegen. Die Mikroabbildungselemente sind typischerweise reflektive oder fokussierende Abbildungselemente, wie Mikrohohlspiegel und Mikrolinsen.

Die Sicherheitselemente können hergestellt werden, indem ein eine Oberseite und eine Unterseite aufweisender Träger, der mehrere flächig in einem ersten Muster angeordnete, reflektive erste Mikroabbildungselemente sowie flächig in einem zweiten Muster angeordnete zweite Mikroabbildungselemente umfasst, hergestellt wird, ein erstes Mikrostrukturobjekt mit mehreren ersten Mikrostrukturen so erzeugt wird, dass sie in einem so an das erste Muster angepassten ersten Mikrostrukturmuster angeordnet sind, dass das erste Mikrostrukturobjekt mittels der ersten Mikroabbildungselemente vor die Oberseite vergrößert abgebildet wird, und ein zweites Mikrostrukturobjekt mit mehreren zweiten Mikrostrukturen so erzeugt wird, dass sie in einem so an das zweite Muster angepassten zweiten Mikrostrukturmuster angeordnet sind, dass das zweite Mikrostrukturobjekt mittels der zweiten Mikroabbildungselemente vor die Unterseite vergrößert abgebildet wird.

Zur Erzeugung der Mikroabbildungselemente sowie auch der Mikrostrukturen können bekannte Mikrostrukturierungsverfahren verwendet werden, wie beispielsweise Prägeverfahren. So können beispielsweise mit aus der Halbleiterfertigung bekannten Verfahren (Fotolithographie, Elektronenstrahllithographie, Laserlithographie, etc.) geeignete Strukturen in Resistmaterialien belichtet, eventuell veredelt, abgeformt und zur Fertigung von Prägewerkzeugen verwendet werden. Besonders geeignet zur Herstellung großer Flächen sind die bekannten Verfahren zur Prägung in thermoplastische Folien oder in mit strahlungshärtenden Lacken beschichtete Folien.

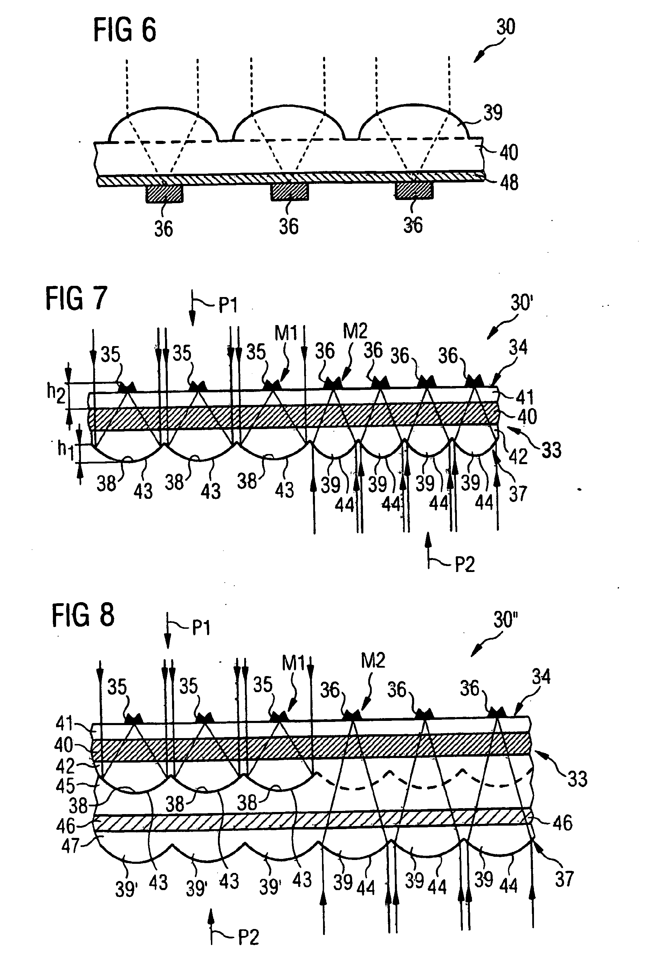

Sicherheitselemente mit Sicherheitsmerkmalen, wie sie in DE 10 2009 022612.5 beschrieben sind, sowie ihre Verwendung als Kernschichtfolie in einer erfindungsgemäßen Folienverbundbanknote werden beispielhaft im Zusammenhang mit den Figuren 7, 8 und 5c beschrieben.

Wie vorstehend dargelegt wurde, ist es besonders bevorzugt, dass sowohl für die Kernschichtfolie als auch für die Deckschichtfolien und die Kaschierklebstoffe transparente oder zumindest transluzente Materialien gewählt werden, damit in der Folienverbundbanknote nicht kopierbare transparente oder transluzente Bereiche erzeugt werden und Sicherheitsmerkmale unter den Deckschichtfolien erkennbar bleiben. Ferner ist es bevorzugt, die Kernschichtfolie zusätzlich mit nicht kopierbaren Sicherheitsmerkmalen auszustatten. Die vorliegende Erfindung weist jedoch nicht nur dann Vorteile auf, wenn transparente Materialien verwendet werden. Vielmehr ist die vorliegende Erfindung generell für mehrschichtige Wertdokumente mit einer Kernschicht bzw. Innenschicht, die mit einem zusätzlichen Element, wie beispielsweise einem Sicherheitselement, ausgestattet werden soll, anwendbar. Insbesondere ist die vorliegende Erfindung dann sehr vorteilhaft anwendbar, wenn es sich bei dem betreffenden Sicherheitselement um ein Element handelt, dessen Dicke mit der Dicke der Kernschicht vergleichbar ist. Derartige Sicherheitselemente sind beispielsweise vielschichtige Sicherheitselemente, die mehrere Sicherheitsmerkmale, wie visuell und maschinell detektierbare Sicherheitsmerkmale, in einem Sicherheitselement vereinigen. Ein Beispiel sind sogenannte LEAD (Longlasting Economical Anticopy Device)-Sicherheitselemente mit einem Schichtaufbau, der beispielsweise eine UV-Prägelackschicht (holographisches Sicherheitsmerkmal), Schichten mit farbstoffhaltigen und pigmentierten Druckfarben, gegebenenfalls Prägefolien sowie eine PVD (physical vapor deposition)-Schicht (z. B. aus Al, Cr, Cu, Metallicfarben), die UV-Strahlung reflektiert, aufweist.

Wenn ein Sicherheitselement mit einer Dicke, die wesentlich geringer ist als die Dicke der Kernschicht des Wertdokuments, d. h. des Basispapiers, nach dem erfindungsgemäßen Verfahren in das Wertdokument eingebracht werden soll, ist es vorteilhaft, die Gesamtdicke des einzubringenden Sicherheitselements an die Dicke des Basispapiers anzupassen. Dazu wird vorab auf das Sicherheitselement eine Folie in der passenden Dicke aufkaschiert, so dass die Gesamtdicke von Sicherheitselement und aufkaschierter Folie in etwa der Dicke des Basispapiers entspricht.

Da sowohl das Basispapier als auch eine oder beide Deckschichtfolien, als auch eine oder beide Klebstoffschichten mit Sicherheitsmerkmalen ausgestattet werden können, besteht die Möglichkeit, die in Papier und/oder Deckschichtfolie und/oder Klebstoff vorliegenden Sicherheitsmerkmale so zu kombinieren, dass sie sich zu einer Gesamtinformation ergänzen oder registerhaltig zueinander eingebracht sind. Bei Sicherheitsmerkmalen, bei denen das wahrnehmbare oder detektierbare Merkmal aus mehreren Komponenten aufgebaut ist, besteht auch die Möglichkeit, einen Teil der Komponenten in der Kernschichtfolie und einen Teil der Komponenten in anderen Schichten des Wertdokuments, beispielsweise der Deckschichtfolie, vorzusehen. Beispielsweise könnten bei einem Sicherheitselement, wie es in DE 10 2009 022612.5 offenbart ist, die abzubildenden Mikrostrukturobjekte in der Kernschichtfolie und die Mikroabbildungselemente in der Deckschichtfolie vorgesehen werden.

Es ist grundsätzlich möglich, die zweite Deckschichtfolie nicht durch Kaschieren aufzubringen, sondern ein Heißsiegelverfahren anzuwenden oder die Folie direkt auf die Kernschicht zu extrudieren. Kaschieren ist jedoch das bevorzugte Verfahren. Hierbei können einerseits durch den Kaschierklebstoff Unebenheiten der Oberfläche der Kernschicht ausgeglichen werden, und andererseits handelt es sich dabei um ein schonendes Verfahren, bei dem nur mäßig erhöhte Temperaturen und Drücke angewendet werden. Es findet keine starke Temperaturbelastung und Druckbelastung der Sicherheitselemente und Deckschichtfolien statt, so dass keine Beschädigungen zu befürchten sind.

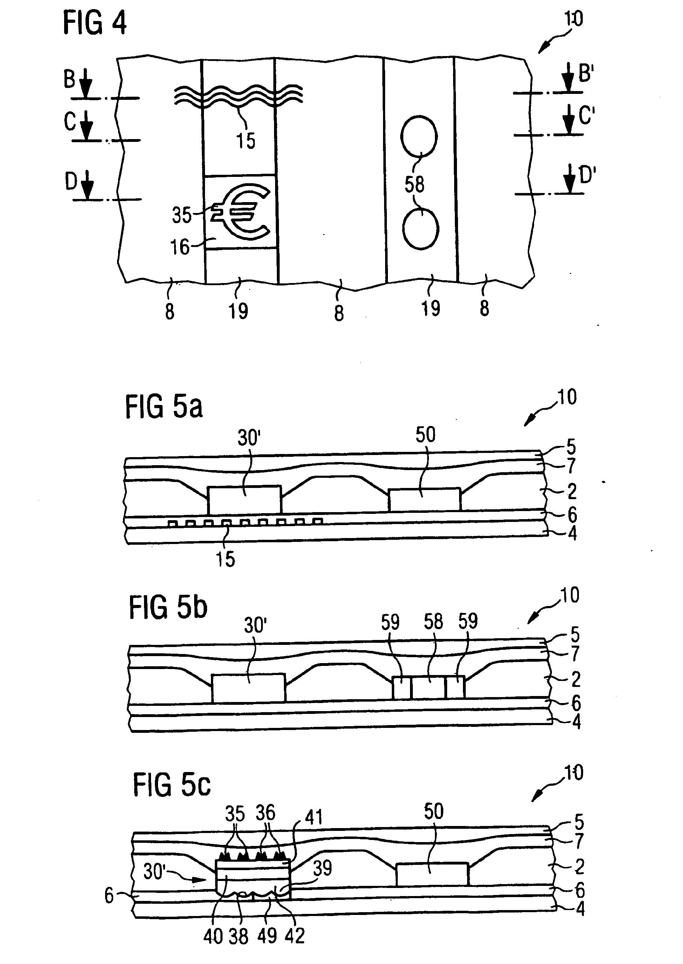

Neben der Gestaltung der Kernschichtfolie als Sicherheitselement mit Sicherheitsmerkmalen kann die Kernschichtfolie auch in ihrer geometrischen Form unterschiedlich gestaltet sein. Beispielsweise kann es sich um ein Folienband mit glatten oder mit gewellten Rändern handeln, oder es können in dem Folienband durchgehende Öffnungen vorgesehen werden, beispielsweise Kreise, Ovale oder Schlitze. Im Bereich derartiger durchgehender Öffnungen wird das über der Kernschichtfolie liegende Basispapier mit der darunterliegenden Deckschichtfolie verklebt, und es können opake Bereiche innerhalb des transparenten Kernschichtfolienbereichs erzeugt werden. Dies wird später im Zusammenhang mit Fig. 4 noch näher erläutert.

Es soll darauf hingewiesen werden, dass die Deckschichten nicht notwendigerweise die Außenschichten des erfindungsgemäßen Wertdokuments darstellen müssen. Vielmehr kann das Wertdokument an einer oder an beiden Seiten weitere Schichten aufweisen, und natürlich auch bedruckt und/oder mit aufgeklebten oder in sonstiger Weise befestigten Sicherheitselementen ausgestattet werden.

Gemäß einer - auch als selbständig erfinderisch angesehenen - Variante der vorliegenden Erfindung können die Kernschichtfolien zum Schutz von Banknoten gegen das Eindringen von Feuchtigkeit und Verschmutzungen an deren Rändern verwendet werden. Bedingt durch das Herstellungsverfahren im Bogenformat mit Bogen mit einer Vielzahl von Banknoten, von denen die Einzelbanknoten abgetrennt werden, weisen Banknoten an ihrem gesamten Umfang Stirnseiten auf, an denen der Schichtaufbau der Banknote im Wesentlichen offen liegt. Bei starker Beanspruchung, wie sie bei Banknoten üblich ist, kann z.B. das Eindringen von Flüssigschmutz zu sichtbaren Rändern an den Banknotenkanten führen. Außerdem führt das Eindringen von Schmutz zu einer Schwächung des Schichtverbunds, und es kann stellenweise zum Trennen des Verbunds Folie/ Papier kommen. Lässt man bei der Herstellung von Bogen oder Endlosmaterial von Folienverbundbanknoten beim Kaschiervorgang von erster Deckschicht und Basispapier Folienbänder zwischen Deckschicht und Basispapier so mit einlaufen, dass jeweils zwei benachbarte Banknoten ein gemeinsames Folienband aufweisen, und schneidet dann zur Trennung der Banknoten voneinander in der Mitte des Folienbands, so erhält man Banknoten, die jeweils an zwei Kanten durch ein Folienband versiegelt und vor Spaltung besser geschützt sind als gewöhnliche Verbundbanknoten mit innen liegendem Basispapier und mit darauf angeordneten Abdeckfolien/ Deckschichten. Gewünschtenfalls kann das Folienband an den Rändern durch Aufdrucken einer Druckannahmeschicht, und gegebenenfalls weitere Aufdrucke weitgehend unsichtbar gemacht werden.

Die vorliegende Erfindung wird nachfolgend anhand von Figuren noch weiter veranschaulicht. Es wird darauf hingewiesen, dass die Figuren lediglich schematische Darstellungen sind und die dargestellten Proportionen nicht der Realität entsprechen. Die Erfindung ist selbstverständlich nicht auf die gezeigten Ausführungsformen beschränkt. Die gezeigten Ausführungsformen weisen für sich genommen, aber auch in Kombination der Merkmale der verschiedenen Ausführungsformen, die erfindungsgemäßen Vorteile auf.

Es zeigen:
- Fig. 1: einen Teilbereich einer erfindungsgemäßen Folienverbund- banknote in Aufsicht,
- Fig. 2a bis 2d: jeweils einen Schnitt entlang der Linie A-A' durch die Folien- verbundbanknote von Fig. 1, wobei verschiedene Stadien des Herstellungsverfahrens der Folienverbundbanknote darge- stellt sind,
- Fig. 3: einen Schnitt analog Fig. 2b durch eine modifizierte Ausfüh- rungsform der Erfindung,
- Fig. 4: einen Teilbereich einer weiteren Ausführungsform einer er- findungsgemäßen Folienverbundbanknote in Aufsicht,
- Fig. 5a, 5b, 5c: jeweils einen Schnitt entlang der Linien B-B', C-C', bzw. D-D' durch die Folienverbundbanknote von Fig. 4,
- Fig. 6, 7, 8: jeweils Teilschnittansichten mikrooptischer Sicherheitsmerk- male als Beispiele für Kernschichtsegment-Sicherheits- merkmale erfindungsgemäßer Folienverbundbanknoten, und
- Fig. 9: einen Schnitt durch eine Folienverbundbanknote, die an einer Kante mit einem Folienband versiegelt ist.

Fig. 1 zeigt einen Teilbereich einer erfindungsgemäßen Folienverbundbanknote 1 in Aufsicht. Die Folienverbundbanknote 1 besteht aus einer Kernschicht mit drei nebeneinander angeordneten Segmenten, nämlich zwei Segmenten aus Papier mit einem Segment aus einer Kunststofffolie dazwischen. Auf die Kernschicht sind zwei Kunststofffolien als Deckschichten aufkaschiert. In der Darstellung in Aufsicht ist nur eine der Deckschicht-Kunststofffolien, die erste Deckschicht 4, sichtbar. Die beiden Deckschichtfolien sowie die Kernschichtfolie und der verwendete Kaschierklebstoff sind transparent, während das Basispapier opak ist. Dadurch ergeben sich opake Kernschichtsegmente 8 und ein dazwischen angeordnetes transparentes Kernschichtsegment 9. Bedingt durch das Herstellungsverfahren ist das transparente Kernschichtsegment bandförmig. Wenn kein transparentes Segment gewünscht ist, das sich über die gesamte Länge oder die gesamte Breite der Folienverbundbanknote erstreckt, können Teilbereiche des transparenten Segments durch geeignetes Bedrucken der Deckschichten abgedeckt werden. Auch das eingebrachte Kernschicht-Folienband selbst kann bedruckt sein, entweder nur mit einer Opazität vortäuschenden Schicht oder mit farbigen Strukturen, die sich gegebenenfalls über die Banknotenbreite bzw. Banknotenhöhe wiederholen können, oder auch mit bildlichen Motiven, wie Portraits. Natürlich können auf dem Kernschicht-Folienband auch Metallisierungen oder sonstige Sicherheitsmerkmale vorhanden sein. Aus Gründen der Einfachheit der Darstellung wurde in den Figuren 1 bis 3 ein transparentes Folienband ohne irgendwelche Sicherheitsmerkmale gewählt.

Die Figuren 2a bis 2d zeigen unterschiedliche Stadien des Herstellungsverfahrens einer erfindungsgemäßen Folienverbundbanknote, dargestellt an Schnitten durch den in Fig. 1 gezeigten Teilbereich der Folienverbundbanknote 1 entlang der Linie A-A'.

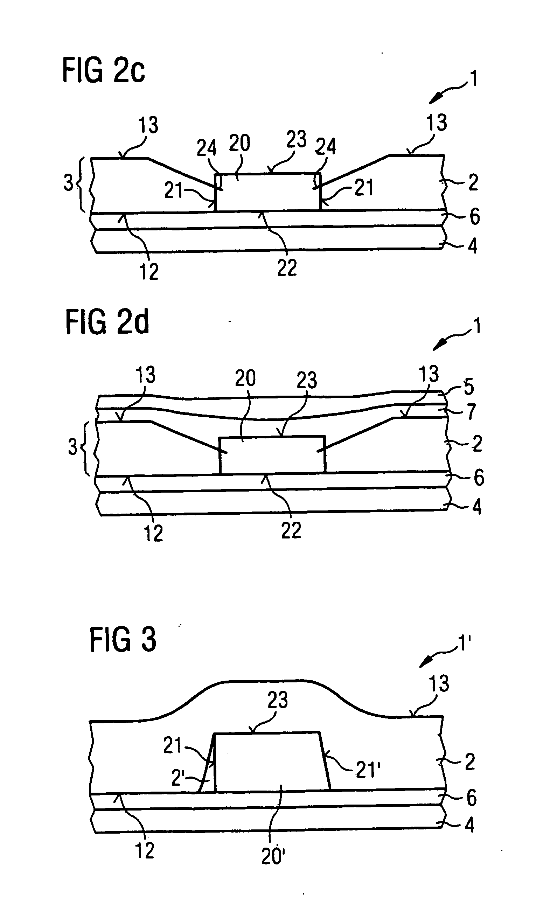

Bei dem erfindungsgemäßen Herstellungsverfahren einer Folienverbundbanknote 1 wird auf eine transparente Kunststofffolie ein transparenter Kaschierklebstoff aufgetragen. In den Figuren 2 bis 5 sind dieses erste Deckschichtmaterial bzw. diese erste Deckschicht und die erste Klebstoffschicht mit den Bezugsziffern 4 und 6 bezeichnet. Auf die Klebstoffschicht 6 wird die Kernschicht 3 aufkaschiert. Die Kernschicht 3 besteht aus einem ersten Kernschichtmaterial 2 und mindestens einem davon verschiedenen zweiten Kernschichtmaterial 20, wobei in dem dargestellten Ausführungsbeispiel das erste Kernsichtmaterial 2 ein einlagiges Papier (Basispapier) und das zweite Kernschichtmaterial 20 ein transparenter Kunststofffolienstreifen ist. Das Basispapier 2 hat eine erste Oberfläche 12 und eine zweite Oberfläche 13, und das Kunststofffolienband 20 hat eine erste Oberfläche 22, eine zweite Oberfläche 23 und zwei Seitenflächen 21. Die Dicke des transparenten Folienbands 20 ist etwas geringer als die Dicke des Basispapiers 2.

Das Aufkaschieren des Basispapiers 2 auf die Deckschichtfolie 4 erfolgt wie in einem konventionellen Kaschierverfahren, jedoch wird zusätzlich zwischen Basispapier 2 und Deckschichtfolie 4 das Folienband 20 in den Kaschierspalt einlaufen lassen. Das Einlaufen muss zumindest in Querrichtung, d. h. senkrecht zur Einlaufrichtung, registriert erfolgen, damit das Folienband 20, und damit der spätere transparente Bereich der Banknote, bei allen Banknoten an derselben Position vorliegt. Ein registriertes Einlaufen in Längsrichtung, d. h. in Einlaufrichtung, ist bei einem transparenten Folienband ohne irgendwelche Motive nicht erforderlich. Wenn auf dem Folienband 20 irgendwelche Strukturen oder Darstellungen vorhanden sind, die auf der späteren Banknote visuell oder maschinell an einer bestimmten Stelle detektiert werden sollen, ist auch eine Passerung in Längsrichtung erforderlich, d. h. das Folienband muss auch in Längsrichtung registriert einlaufen. Als Orientierung für ein registriertes Einlaufen können beispielsweise Sicherheitsmerkmale der Banknote, wie Wasserzeichen im Basispapier oder entsprechende Marken, dienen. Bei Banknoten sind bevorzugt einzuhaltende Toleranzen senkrecht zur Einlaufrichtung etwa 1 mm, und bei Strukturen, die eine Passerung in Längsrichtung erfordern, etwa 2 mm in Einlaufrichtung.

Wie aus Fig. 2a ersichtlich, wird bei dem ersten Kaschiervorgang ein Verbund gebildet, bei dem die erste Deckschichtfolie 4 mittels der Klebstoffschicht 6 vollflächig und unmittelbar mit der ersten Oberfläche 22 des Folienbands 20 und mit Teilbereichen der ersten Oberfläche 12 des Basispapiers 2 verklebt wird. Kein Klebstoff befindet sich an den Seitenflächen 21 und der zweiten Oberfläche 23 des Folienbands 20, so dass hier keine Verklebung mit dem Basispapier 2 stattfindet. Die zweite Oberfläche 13 des Basispapiers 2 bildet keine ebene Fläche, sondern ist in den Bereichen, in denen das Basispapier über dem Folienband 20 liegt, nach oben gewölbt. Die Wölbung ist typischerweise weniger stark ausgeprägt als in Fig. 2a gezeigt, da durch die erhöhte Dicke im Bereich des Folienbands 20 das Basispapier 2 bei der Kaschierung stärker kalandriert wird. Das Folienband 20 zeichnet sich überraschend stark im Basispapier 2 ab. Erfindungsgemäß wird nun das Basispapier im Bereich der zweiten Oberfläche 23 des Folienbands 20 entfernt.

Die Entfernung des Basispapiers 2 im Bereich der zweiten Oberfläche 23 des Folienbands 20 ist in Fig. 2b gezeigt. Es wird so viel Basispapier entfernt, dass die zweite Oberfläche 23 des Folienbands 20 vollständig freigelegt wird, und dass außerdem die zweite Oberfläche 13 des Basispapiers 2 und die zweite Oberfläche 23 des Folienbands 20 gemeinsam eine möglichst ebene Kernschicht-Oberfläche bilden. Eine derartige Abtrennung kann durchgeführt werden, wie in Fig. 2b durch die Messer 11 angedeutet. Mithilfe der Messer 11 werden die überstehenden Bereiche des Basispapiers 2 abgeschnitten und können dann, da zwischen dem Basispapier und der zweiten Oberfläche 23 des Folienbands keine Haftung besteht, leicht abgezogen werden. In der dargestellten Ausführungsform weist das Folienband 20 eine etwas geringere Dicke auf als das Basispapier 2. In diesem Fall ist es am günstigsten, eine leicht schräge Stellung der Messer 11 zu wählen, d. h. die Messer 11 und die Oberflächen der ersten Deckschichtfolie 4 bilden eine spitzen Winkel. Je nach Höhendifferenz zwischen den Oberflächen 13 und 23 sind Winkel zwischen 0° und 40° bevorzugt, zwischen 5° und 20° besonders bevorzugt. Die Schnitthöhe der Messer wird so eingestellt, dass die Seitenflächen 21 des Folienbands 20 an einer Stelle, die etwa 10 % bis 30 % der Gesamthöhe der Seitenflächen 21 unterhalb der Oberfläche 23 liegt, angeschnitten werden. Diese Schnitthöhe gewährt eine gewisse Toleranz hinsichtlich der erforderlichen Einstellgenauigkeit der Messer 11. Wenn die Einstellhöhe etwas zu hoch ist, wird trotzdem noch die Seitenfläche 21 angeschnitten, nicht die Oberfläche 23 des Folienbands 20. Ein Anschneiden der Oberfläche 23 wäre zum einen sichtbar und würde zum anderen dazu führen, dass an der Oberfläche 23 noch Restbereiche des Basispapiers 2 zurückbleiben. Bei einer etwas zu niedrigen Einstellhöhe der Messer 11 wird ebenfalls immer noch die Seitenfläche 21 angeschnitten, d. h. es bleibt auf jeden Fall eine Schicht aus Basispapier 2 auf der ersten Deckschichtfolie 4.

Alternativ können die Messer 11 auch völlig horizontal geführt werden, d. h. parallel zur zweiten Oberfläche 23 des Folienbands 20, wobei die Schnitthöhe wie oben wiederum so gewählt wird, dass die Seitenflächen 21 des Folienbands 20 knapp unterhalb der Oberfläche 23 angeschnitten werden. Dieser horizontale Schnitt hat den Vorteil, dass sich eine nahezu ebene Kernschicht-Oberfläche ergibt, aber auch den Nachteil, dass sehr viel Papier geschnitten werden muss, jedenfalls dann, wenn die Dicke des Basispapiers 2 größer ist als die Dicke des Folienbands 20. Wenn das Folienband 20 etwas dicker ist als das Basispapier 2, ist die horizontale Schnittführung der Messer 11 jedoch die Methode der Wahl. Die Messer 11 werden dann horizontal dicht über der Oberfläche des Basispapiers 2 geführt, dringen in den im Bereich des Folienbands 20 überstehenden Bereich des Basispapiers ein und durchtrennen das Basispapier, und treffen schließlich auf die Seitenflächen 21 des Folienbands 20 auf.

In jedem Fall, sowohl bei horizontaler als auch bei leicht schräger Messerstellung, werden die Seitenflächen 21 des Folienbands 20 leicht angeschnitten. Diese Einschnitte sind mit den Bezugsziffern 24 bezeichnet. Normalerweise sind derartige Einschnitte bei der fertigen Banknote nicht sichtbar und daher auch nicht störend. Falls gewünscht, kann die Bedruckung der Außenschichten der Banknote geringfügig in den transparenten Bereich des Folienbands 20 hineingezogen werden, so dass die leichten Einschnitte 24 durch Farbschichten überdeckt werden.

Ungeeignete Messereinstellungen sind in Fig. 2b mit den Bezugsziffern 17 und 18 bezeichnet. Das Messer 17 bildet mit der Ebene der ersten Deckschicht 4 einen wesentlich weniger spitzen Winkel als das Messer 11, was dazu führt, dass bei den dargestellten Dickenverhältnissen von Basispapier 2 und Folienband 20 am Übergang zwischen der zweiten Oberfläche 13 des Basispapiers und der zweiten Oberfläche 23 des Folienbands 20 eine ausgeprägte Stufe ausgebildet wird. Vor allem aber ist das Messer 17 so eingestellt, dass es beim Schneiden auf die zweite Oberfläche 23 des Folienbands 20 auftrifft. Das bedeutet zum einen, dass die Oberfläche 23 in sichtbarer Weise beschädigt werden kann, und zum anderen, dass die Oberfläche 23 nicht vollständig freigelegt wird. Nach dem Abziehen des abgeschnittenen Bereichs des Basispapiers bleibt im Randbereich der zweiten Oberfläche 23 noch Papier zurück. Bei der vertikalen Messerstellung 18, wie sie in Fig. 2b gezeigt ist, wird das Basispapier 2 nicht vollständig durchtrennt, so dass sich beim Abziehen Probleme ergeben und das Papier in dem an das Folienband 20 angrenzenden Bereich abgerissen werden muss. Es kann auch, je nach Richtung der Abweichung von der idealen Schnittlinie, ein Effekt wie bei der Messerstellung 17 auftreten, d. h. es kann noch Basispapier im Randbereich der Oberfläche 23 zurückbleiben. Bei der erfindungsgemäßen stark spitzwinkeligen Messerstellung 11 mit Anschneiden der Seitenflächen 21 knapp unter der Oberfläche 23 des Folienbands 20 sind Abweichungen von der idealen Einstellung unschädlich, und es ist in Anbetracht der erzielbaren Einstellgenauigkeit empfehlenswert, ein Auftreffen der Messer auf die Seitenflächen 21 im Bereich etwa 10 bis 30%, bevorzugt etwa 10 bis 20%, unterhalb der Ebene der Oberfläche 23 anzustreben.

Alternativ können die überstehenden Bereiche des Basispapiers auch durch Schleifen oder Fräsen entfernt werden, jedenfalls wenn die Dicke des Folienbands 20 geringer bis maximal so groß ist wie die Dicke des Basispapiers 2. Man erhält dabei eine völlig ebene Kernschicht-Oberfläche, wobei jedoch die Oberfläche 23 des Folienbands 20 durch das Schleifen oder Fräsen lokal beschädigt werden kann. Das Verfahren ist daher nicht für alle Zwecke geeignet. Zumindest muss das Folienband 20, wenn es Sicherheitsmerkmale enthält, in einer solchen Orientierung in den Verbund eingebracht werden, dass beim Schleifen oder Fräsen keine Sicherheitsmerkmale zerstört werden. Beschädigungen in einer Folienband-Oberfläche 23, die keine Sicherheitsmerkmale aufweist, können weitgehend unsichtbar gemacht werden, indem zur Verklebung der Oberfläche mit der weiteren Deckschicht der Folienverbundbanknote ein Klebstoff mit einem auf das beschädigte Folienband abgestimmten Brechungsindex gewählt wird.

Für die passende Einstellung der Messer gibt es mehrere Möglichkeiten, wobei in erster Linie mechanische und optische Verfahren zur Bestimmung des zu entfernenden Bereichs des Basispapiers infrage kommen. Da der Verbund aus Basispapier 2 und erster Deckschicht 4 im Bereich des zusätzlichen Folienbands 20 dicker ist als in den übrigen Bereichen, ist das Folienband 20 deutlich tastbar. Dadurch kann durch eine mechanische Kopplung eines Tasters mit den Messern 11 der Schnitt an der richtigen Stelle erfolgen. Die Dicke des Folienbands 20 ist bekannt. Daher ist auch bekannt, in welcher Höhe die Messer 11 auf die verdickte Stelle (auf die Seitenflächen 21) auftreffen sollten. Die Neigung der Messer 11 wird bevorzugt so eingestellt, dass so horizontal wie möglich geschnitten wird.

Die Verdickung kann bei geeigneter Beleuchtung auch optisch erfasst werden. Durch die im Bereich der zusätzlichen Folienbahn 20 erhöhte Dicke wird in diesem Bereich das Papier bei der Kaschierung stärker kalandriert, und die stärker kalandrierte Spur kann optisch von der Umgebung unterschieden werden. Auch von der Rückseite, d. h. von der Seite der Deckschichtfolie 4, her kann die zusätzliche Folienbahn detektiert werden. Die optische Erfassung ist insbesondere dann einfach, wenn die Folienbahn durch zusätzliche Merkmale nicht völlig transparent ist. Die optische Feststellung der geeigneten Schnittstellung kann auch durch passende Wahl von aufeinander abgestimmten Materialien von Kernschicht-Folienband und Deckschichtfolie ermöglicht werden. Beispielsweise ist Polyesterfolie für UV-Strahlung im Wellenlängenbereich unterhalb von 300 nm nicht transparent. Polyethylen und Polypropylen hingegen sind fast im gesamten UV-Bereich transparent. Wird daher beispielsweise die Deckschichtfolie 4 aus Polyethylen hergestellt, während das Kernschicht-Folienband 20 aus Polyester hergestellt wird, und dann mit UV-Strahlung mit einer Wellenlänge von 250 nm bestrahlt, so kann der Bereich des Kernschicht-Folienbands 20 problemlos als nicht transparenter Bereich erkannt werden. Bei Materialien mit ähnlichem Absorptionsverhalten kann eine "Anfärbung" mit geeigneten Absorbern helfen. Beispielsweise kann das Kernschicht-Folienband 20 mit geringen Mengen eines IR-Absorbers oder UV-Absorbers ausgestattet werden, so dass das Folienband 20 in einem nicht sichtbaren Bereich detektiert werden, und somit die Anlagensteuerung vereinfacht werden kann.

Nach dem Schneiden des Basispapiers 2, beispielsweise mit Messern oder Lasern, wird das Basispapier 2 über dem Folienband 20 und zu einem gewissen Teil über an das Folienband 20 angrenzenden Bereichen, abgezogen. Dieser Zustand ist in Fig. 2c gezeigt. Man erkennt, dass die Kernschicht 3 aus 3 Segmenten besteht, dem transparenten Folienband 20 und den beiden opaken Basispapier-Segmenten zu beiden Seiten des Folienband-Segments. Die zu diesem Zeitpunkt exponierte Oberfläche der Kernschicht setzt sich aus der zweiten Oberfläche 23 des Folienbands 20 und den zweiten Oberflächen 13 des Basispapiers 2 zusammen. Die zweite Oberfläche der Kernschicht 3 ist nicht völlig eben. Eine völlig ebene Oberfläche könnte erhalten werden durch Schneiden mit horizontaler Messerstellung oder durch Abschleifen oder Abfräsen des Basispapiers 2. Auf den Verbund aus erster Deckschicht 4 und Kernschicht 3 wird nun die zweite Deckschicht 5 aufkaschiert. Dazu wird entweder auf eine zweite Deckschichtfolie 5 oder auf die exponierte Oberfläche der Kernschicht 3 ein Kaschierklebstoff 7 aufgetragen, und dann die zweite Deckschicht 5 und der Verbund aus erster Deckschicht 4 und Kernschicht 3 in einem Kaschierwerk zusammengefügt. Dabei werden die Kernschicht 3 und die zweite Deckschichtfolie 5 mittels der zweiten Klebstoffschicht 7 unmittelbar und vollflächig miteinander verklebt. Dieser Zustand ist in Fig. 2d gezeigt.

Der in Fig. 2d im Schnitt gezeigte Teilbereich der erfindungsgemäßen Folienverbundbanknote weist eine Kernschicht 3 mit einer ebenen ersten Oberfläche, die sich aus der ersten Oberfläche 12 des Basispapiers und der ersten Oberfläche 22 des Folienbands 20 zusammensetzt, und eine etwas unebene zweite Oberfläche, die sich aus der zweiten Oberfläche 13 des Basispapiers und der zweiten Oberfläche 23 des Folienbands 20 zusammensetzt, auf. Die Unebenheiten der zweiten Oberfläche können durch Auftragung geeignet angepasster Mengen an Kaschierklebstoff ausgeglichen werden. Insbesondere kann es vorteilhaft sein, wenn speziell in den Bereichen, in denen die zweite Oberfläche 13 des Basispapiers und die zweite Oberfläche 23 des Folienbands aneinandertreffen, und in denen die Kernschicht-Oberfläche meist eine Stufe aufweist, die Menge an Kaschierklebstoff erhöht wird, damit Unvollkommenheiten im Stufenbereich kompensiert werden. Wenn das Folienband 20 etwas dicker ist als das Basispapier 2 kann der Kaschierklebstoff auch diese Unebenheit ausgleichen. Alternativ zum Aufkaschieren der zweiten Deckschicht 5 mittels einer zweiten Klebstoffschicht 7 kann die zweite Deckschicht 5 auch unmittelbar auf die zweite Oberfläche der Kernschicht aufextrudiert werden. Dieses Verfahren empfiehlt sich aber nur bei unempfindlichen Materialien und einer im Wesentlichen ebenen zweiten Oberfläche der Kernschicht 3.
Fig. 3 zeigt einen Schnitt analog der Darstellung der Figur 2b unter Berücksichtigung einiger Besonderheiten. Im ersten Kaschierschritt, beim Kaschieren von erster Deckschicht 4 und späterer Kernschicht 3, ist der Kaschierdruck im Kantenbereich zwischen dem Basispapier und dem Folienband recht gering, da das zusätzliche Folienband das Papier "wegdrückt". Daher können sich im Bereich der Seitenflächen 21 des Folienbands 20 Bläschen oder sogar ein Luftspalt bilden. Ein derartiger Luftspalt ist in Fig. 3 mit der Bezugsziffer 2' bezeichnet. Ein gewisser Luftspalt 2' zwischen Basispapier 2 und Folienband 20 ist einerseits vorteilhaft, da er, zusammen mit der verdickungsbedingten Winkelung des Verbunds zur Horizontale, das Schneiden mit Messern oder Lasern erleichtert. Andererseits aber kann ein Luftspalt 2' zu Unvollkommenheiten im Bereich der Kante 21 führen, so dass es erforderlich werden kann, die entsprechenden Bereiche durch geeignetes Überdrucken zu kaschieren. Derartige kleine Mängel, die insbesondere bei sehr dicken Folienbändern auftreten können, können vermieden werden, indem man ein Folienband mit leicht angeschrägten Kanten verwendet, wie durch die rechte Seitenfläche 21' des Folienbands 20' in Fig. 3 angedeutet.

Fig. 4 zeigt einen Teilbereich einer weiteren Ausführungsform einer erfindungsgemäßen Folienverbundbanknote 10 in Aufsicht, und die Figuren 5a, 5b, 5c zeigen Schnittansichten davon. Die Folienverbundbanknote 10 weist, wie die Folienverbundbanknote 1, eine Kernschicht 3 und zwei Deckschichten 4, 5 auf, wobei die Deckschichten transparent sind und mittels transparenten Klebstoffen mit der Kernschicht 3 verklebt sind. Die Kernschicht weist in diesem Fall zwei Kunststofffolienbänder 30', 50 sowie ein Basispapier 2 auf. Bedingt durch das Basispapier 2 weist die Folienverbundbanknote 10 opake Bereiche 8 auf. Die Folienbänder 30' und 50 sind aus einem transparenten Kunststoffmaterial hergestellt und weisen Sicherheitsmerkmale bzw. Modifizierungen auf. Die von den Folienbändern 30', 50 gebildeten Segmente der Kernschicht bilden die teiltransparenten Bereiche 19 der in Fig. 4 gezeigten Folienverbundbanknote. Das Folienband 30' ist als Sicherheitselement mit einem Sicherheitsmerkmalbereich 16 ausgebildet. Der Sicherheitsmerkmalbereich 16 lässt in Aufsicht auf die Deckschichtfolie 4 ein "EURO"-Zeichen erkennen. Ebenfalls erkennbar ist ein Wellenlinien-Aufdruck 15, der sich sowohl über den Bereich 19 des Folienbands 30' als auch über Teilbereiche der benachbarten Segmente 8 erstreckt.

Der von dem Folienband 50 gebildete Bereich 19 weist opake Teilbereiche 58 auf, während der Rest des Bereichs 19 transparent ist. Ein derartiger transparenter Bereich mit opaken Teilbereichen kann mittels eines transparenten Folienbands verwirklicht werden, das Löcher in der Form der gewünschten opaken Bereiche aufweist. Ein derartiges Folienband ist das Folienband 50. Lässt man bei dem im Zusammenhang mit Fig. 2a beschriebenen ersten Kaschierschritt nicht ein Folienband, wie das dort beschriebene Folienband 20, in den Verbund einlaufen, sondern ein Folienband 50 mit Löchern, so wird das Basispapier 2 in den Löchern mit der Deckschicht 4 verklebt. Nach geeignet gepassertem Stanzen oder nach Schneiden, wie in Fig. 2b beschrieben, kann das nicht verklebte Basispapier 2 über dem Folienband 50 wieder von der Oberfläche des Folienbands 50 abgezogen werden. Man erhält dabei einen Verbund wie bei Fig. 2c beschrieben, wobei sich jedoch auch innerhalb des Folienbands Segmente aus Papier befinden. Darauf wird dann die zweite Deckschicht 5 aufkaschiert, wie bei Fig. 2d beschrieben.

Alternativ kann man die opaken Bereiche 58 auf der Folienbahn 50 auch vorab herstellen, beispielsweise indem man eine dünne transparente Folie sowie eine Folie mit Löchern in den gewünschten Abmessungen mittels einer Klebstoffschicht verklebt, dann die "löchrige" Folie mit Papierfasern oder einem anderen Beflockungsstoff beflockt, überschüssige Flocken absaugt oder abbläst, und dann Folienbahnen in den gewünschten Abmessungen schneidet. Diese Folienbahnen können dann einkaschiert werden, wie für die Folienbahn 20 bei Fig. 2a beschrieben, wobei die Folienbahn so orientiert ist, dass die beflockte Seite zum Basispapier 2 weist. In den vorab beflockten Bereichen haftet kein Basispapier, weshalb sich eine Folienbahn mit vorab beflockten Löchern genauso weiter verarbeiten lässt, wie im Zusammenhang mit der Folienbahn 20 beschrieben.

Fig. 5a zeigt einen Schnitt entlang der Linie B-B' durch die Folienverbundbanknote 10 von Fig. 4. Man erkennt, dass die Kernschicht aus drei unterschiedlichen Segmenten zusammengesetzt ist, nämlich einem Segment, das von dem Folienband 30' gebildet wird, einem Segment, das von dem Folienband 50 gebildet wird, und drei Segmenten, die jeweils von dem Basispapier 2 gebildet werden. Das Folienband 50 hat eine geringere Dicke als das Folienband 30'. Die Deckschichtfolie 4 trägt einen Aufdruck 15, der beispielsweise mit einer Druckfarbe, die Interferenzschichtpigmente oder Flüssigkristallpigmente enthält, oder auch mit einer konventionellen Druckfarbe gedruckt sein kann. Wenn man die Banknote kopiert, den in der Kopie natürlich nicht transparenten Bereich ausschneidet und durch einen transparenten Einsatz zu ersetzen versucht, muss man auch den Aufdruck 15 entsprechend ergänzen. Die exakte Passerung ist dabei um so schwieriger, je feiner der Aufdruck 15 ist. Das Vorsehen von Sicherheitsmerkmalen, die sich sowohl über transparente Bereiche als auch über benachbarte nicht transparente Bereicht erstrecken, schafft daher einen zusätzlichen Fälschungsschutz.

Fig. 5b zeigt einen Schnitt entlang der Linie C-C' durch die Folienverbundbanknote 10 von Fig. 4. In diesem Bereich weist das transparente Kunststofffolienband 50 ein Loch auf, das mit Basispapier 2 gefüllt ist. Das Folienband 50 besitzt daher einen opaken Bereich 58, der von transparenten Bereichen 59 umgeben ist. Das Folienband 30' ist in der Schnittebene C-C', wie bereits vorher in der Schnittebene B-B', ein einfaches transparentes Folienband.

Anders bei dem in Fig. 5c gezeigten Schnitt entlang der Linie D-D' durch die Folienverbundbanknote 10 von Fig. 4. In diesem Bereich ist das Folienband 30' als Sicherheitselement mit optisch variablen Sicherheitsmerkmalen gestaltet. Genauer handelt es sich dabei um Sicherheitsmerkmale, wie sie im Zusammenhang mit Fig. 7 noch genauer beschrieben werden. Eine Besonderheit dieses Sicherheitselements mit mikrooptischen Sicherheitsmerkmalen ist, dass ein Betrachter unterschiedliche Motive erkennt, je nachdem, ob er die Banknote in Aufsicht auf die erste Deckschicht 4 (hier sieht er ein Euro-Motiv) oder in Aufsicht auf die zweite Deckschicht 5 (hier sieht er beispielsweise die Zahl 10) betrachtet. Das Folienband 50 ist in der Schnittebene D-D' ein transparenter Kunststofffolienstreifen.

Die Figuren 6 bis 8 zeigen Beispiele für mikrooptische Sicherheitsmerkmale, also Sicherheitsmerkmale mit fokussierenden Elementen, wie Mikrolinsen oder Mikrohohlspiegeln, und mikroskopischen Strukturen, die ein Mikromotiv bilden und bei Betrachtung durch die fokussierenden Elemente in Vergrößerung zu sehen sind. Damit mittels der fokussierenden Elemente jeweils eine vollständige Mikrostruktur erkennbar ist, müssen die Mikrostrukturen und die fokussierenden Elemente etwa dieselbe Größenordnung haben. Außerdem ist die Vergrößerungswirkung der fokussierenden Elemente umso größer, je näher am Brennpunkt der fokussierenden Elemente sich die Mikrostruktur befindet. Da die Brennweite umso kleiner ist, je stärker die Krümmung der fokussierenden Elemente ist, muss für eine gute Vergrößerung entweder der Abstand zwischen fokussierendem Element und Mikrostruktur groß sein (bei geringer Krümmung des fokussierenden Elements) oder ein stark gekrümmtes fokussierendes Element verwendet werden (bei kleinem Abstand zwischen fokussierendem Element und Mikrostruktur). Da starke Krümmungen der fokussierenden Elemente schwierig herzustellen sind, aber starke Vergrößerungen gewünscht sind, weisen Sicherheitselemente mit mikrooptischen Echtheitsmerkmalen eine Dicke auf, die ihre Verwendung bei Wertdokumenten, wie Banknoten, schwierig macht. Die vorliegende Erfindung, die eine problemlose Integration dicker Sicherheitselement in die Kernschicht bzw. Innenschicht einer Folienverbundbanknote ermöglicht, ist für derartige Sicherheitselemente mit besonderem Vorteil anwendbar.

Fig. 6 zeigt schematisch den Schichtaufbau eines einfachen mikrooptischen Sicherheitselements 30 im Querschnitt. Das Sicherheitselement 30 enthält einen Träger 40 in Form einer transparenten Kunststofffolie. Die Oberseite der Trägerfolie 40 ist mit einer rasterförmigen Anordnung von Mikrolinsen 39 versehen, die auf der Oberfläche der Trägerfolie ein Gitter mit einer vorgewählten Symmetrie bilden. Auf der Unterseite der Trägerfolie 40 ist eine Motivschicht angeordnet, die eine ebenfalls rasterförmige Anordnung von identischen Mikromotivelementen 36 enthält. Auch die Anordnung der Mikromotivelemente bzw. Mikrostrukturen 36 bildet ein zweidimensionales Gitter mit einer vorgewählten Symmetrie.

Wie in Fig. 6 durch den Versatz der Mikrostrukturelemente 36 gegenüber den Mikrolinsen 39 angedeutet, unterscheidet sich das Gitter der Mikrostrukturelemente 36 in seiner Symmetrie und/ oder in der Größe seiner Gitterparameter geringfügig von dem Gitter der Mikrolinsen 39. Dadurch wird ein Moire-Vergrößerungseffekt erzeugt. Werden die Mikrostrukturelemente 36 genau in der Rasterweite der Mikrolinsen 39 gedruckt, lassen sich Wechselbildeffekte erzielen. Beispielsweise kann dadurch ein sogenanntes "Flash"-Bild erzeugt werden, bei dem die Mikrostrukturen für einen Beobachter nur aus einer bestimmten Betrachtungsrichtung sichtbar sind, während sie aus allen anderen Richtungen nicht erkennbar sind. Die Gitterperiode und der Durchmesser der Mikrostrukturelemente 36 liegen in derselben Größenordnung wie die Gitterperiode und der Durchmesser der Mikrolinsen 39 und sind mit bloßem Auge nicht zu erkennen. Fig. 6 zeigt ein Sicherheitselement, bei dem die Mikrostrukturelemente 36 durch Mikrotiefdruck aufgebracht wurden. Auf der den Mikrolinsen 39 gegenüberliegenden Seite des Trägers ist daher eine Stützschicht 48 vorgesehen, die beispielsweise aus transparentem, UV-härtendem Lack besteht. Die Mikrolinsen 39 sind beispielsweise in einen UV-härtenden Prägelack eingeprägt.

Fig. 7 zeigt eine Schnittdarstellung eines mikrooptischen Sicherheitsmerkmals, wie es in dem Folienband 30' der Figuren 4 und 5 (Sicherheitsmerkmalbereich 16) vorgesehen ist. Das als Sicherheitselement ausgebildete Folienband 30' umfasst einen Träger 33, der auf seiner Oberseite 34 geprägte erste und zweite Mikrostrukturen 35, 36, und auf seiner Unterseite 37 abschnittsweise mehrere Mikrohohlspiegel 38 und mehrere Mikrolinsen 39 aufweist. Die Mikrohohlspiegel 38 sind in einer Ebene senkrecht zur Zeichenebene von Fig. 7 in einem Raster mit fester Geometrie (beispielsweise in einem hexagonalen Raster) und somit flächig in einem ersten Muster angeordnet.

Die ersten Mikrostrukturen 35, die ein erstes Mikrostrukturobjekt bzw. Mikrobild M1 bilden, sind ebenfalls in einer Ebene senkrecht zur Zeichenebene von Fig. 7 in einem Raster mit fester Geometrie (beispielsweise in einem hexagonalen Raster) und somit flächig in einem ersten Mikrostrukturmuster angeordnet, wobei das erste Mikrostrukturmuster so an das erste Muster angepasst und beide Muster so zueinander ausgerichtet sind, dass bei Betrachtung des Sicherheitselement-Folienbands 30' von der Oberseite (Richtung des Pfeils P1) die ersten Mikrostrukturen 35 zusammen mit den Mikrohohlspiegeln 38 eine Modulo-Vergrößerungsanordnung bilden. Das Grundprinzip einer derartigen Modulo-Vergrößerungsanordnung ist beispielsweise in WO 2009/000528 A1 beschrieben, deren Inhalt diesbezüglich in die vorliegende Anmeldung mit aufgenommen wird, wobei das erste Mikrostrukturobjekt M1 der vorliegenden Erfindung dem Motivbild gemäß der Lehre der WO 2009/000528 A1 entspricht.

Somit ist bei Blickrichtung auf die Oberseite des Sicherheitselement-Folienbands 30' (Richtung von Pfeil P1) für einen Betrachter das erste Mikrostrukturobjekt M1 vergrößert als ein erstes Sicherheitsmerkmal (als Sollbild im Sinne der WO 2009/000528 A1) wahrnehmbar. Es kann sich dabei beispielsweise um die Denomination der Banknote, z. B. die Zahl 10, handeln. Natürlich ist es auch möglich, das erste Mikrostrukturmuster der ersten Mikrostrukturen 35 sowie das erste Muster der Mikrohohlspiegel 38 so aufeinander abzustimmen, dass eine Moiré-Vergrößerungsanordnung vorliegt (wie beispielsweise in WO 2006/087138 A1 beschrieben).

Ferner sind die Mikrolinsen 39 in einer Ebene senkrecht zur Zeichenebene von Fig. 7 in einem Raster mit fester Geometrie (beispielsweise einem hexagonalem Raster oder Parallelogramm-Raster) und somit flächig in einem zweiten Muster angeordnet. Die zweiten Mikrostrukturen 36, die ein zweites Mikrostrukturobjekt bzw. Mikrobild M2 bilden, sind ebenfalls in einer Ebene senkrecht zur Zeichenebene von Fig. 7 in einem Raster mit fester Geometrie (beispielsweise einem hexagonalen Raster oder Parallelogramm-Raster) und somit flächig in einem zweiten Mikrostrukturmuster angeordnet. Das zweite Mikrostrukturmuster und das zweite Muster der Mikrolinsen sind so aneinander angepasst und zueinander ausgerichtet, dass bei Betrachtung des Sicherheitselement-Folienbands 30' von der Unterseite 37 her (also in Richtung des Pfeils P2) wiederum eine Modulo- oder Moiré-Vergrößerungsanordnung vorliegt. Ein Betrachter kann somit das zweite Mikrostrukturobjekt M2 als zweites Sicherheitsmerkmal (beispielsweise als das EURO-Zeichen) wahrnehmen, wobei das Sicherheitselement 30' bevorzugt so ausgebildet ist, dass die beiden Sicherheitsmerkmale unterschiedlich sind. Natürlich ist es auch möglich, dass beide Sicherheitsmerkmale gleich sind.

Bei dem in Fig. 7 gezeigten Aufbau umfasst der Träger 33 eine PET-Folie 40, auf der eine erste Schicht 41 aus strahlungshärtendem Lack aufgebracht ist, die die ersten und zweiten Mikrostrukturen 35, 36 aufweist. Die Mikrostrukturen 35, 36 können in bekannter Weise hergestellt werden, beispielsweise durch Prägen in den strahlungshärtenden Lack 41 und anschließendes Aufdrucken und Abrakeln von Farbe. Als weitere Färbeverfahren können bestimmte Farbübertragungsverfahren oder Mikrotiefdrucktechniken eingesetzt werden, die beispielsweise in PCT/EP 2008/010739 oder WO 2008/000350 beschrieben sind, deren Offenbarungsgehalt insoweit in die vorliegende Anmeldung aufgenommen wird. Auf der Unterseite der PET-Folie 40 ist eine zweite Schicht 42 aus strahlungshärtendem Lack ausgebildet, in der die Negativform der Mikrohohlspiegel 38 sowie die Form der Mikrolinsen 39 geprägt ist. Zur Erzeugung der Mikrohohlspiegel 38 ist die von der PET-Folie 40 abgewandte Seite der zweiten Schicht 42 mit einer Verspiegelung 43 (beispielsweise einer Metallisierung) beschichtet. Die Mikrohohlspiegel 38 sind somit als Rückflächenspiegel ausgebildet. Die Innenseite der Verspiegelung 43 jedes Mikrohohlspiegels 38 bzw. die geprägte Form für die Mikrohohlspiegel 38 hat die Form einer Kugelkalotte mit einer Höhe h1, und die Schicht 41 einschließlich der Mikrostrukturen 35,36 hat die Höhe h2.

Der Ebenenbereich, in dem die Brennpunkte der Mikrohohlspiegel 38 liegen, wird als der erste Objektebenenbereich bezeichnet, und ist hier der Abschnitt der Oberseite 34, in dem die ersten Mikrostrukturen 35 ausgebildet sind. Die konvexe Seite 44 der Mikrolinsen 39 weist ebenfalls die Form einer Kugelkalotte auf, und der Abschnitt der Oberseite 34, in dem die Brennpunkte der Mikrolinsen 39 liegen, wird als zweiter Objektebenenbereich bezeichnet. Wie in Fig. 7 durch die eingezeichneten Strahlenverläufe angedeutet ist, bewirken die Mikrohohlspiegel 38 eine vergrößernde Abbildung der ersten Mikrostrukturen 35 durch die Oberseite 34 des Trägers 33 hindurch und somit vor die Oberseite 34, so dass ein Betrachter, der in Richtung des Pfeils P1 auf das Sicherheitselement-Folienband 30' blickt, das erste Mikrostrukturobjekt M1 durch die Moiré- oder Modulo-Vergrößerung als erstes Sicherheitsmerkmal wahrnimmt. Mittels der Mikrolinsen 39 erfolgt eine vergrößernde Abbildung der zweiten Mikrostrukturen 36 durch die Unterseite 37 des Trägers 33 hindurch und somit vor die Unterseite 37, wie durch die eingezeichneten Strahlenverläufe angedeutet ist, so dass ein Betrachter, der in Richtung des Pfeils P2 auf das Sicherheitselement-Folienband 30' blickt, das zweite Mikrostrukturobjekt M2 durch die Moire- oder Modulo-Vergrößerung als zweites Sicherheitsmerkmal wahrnimmt.

Das Sicherheitselement-Folienband 30' bietet somit einem Betrachter in Abhängigkeit davon, ob der Betrachter auf die Oberseite 34 oder die Unterseite 37 des Trägers 33 blickt, unterschiedliche optische Sicherheitsmerkmale bzw. Informationen.

Da bei stark gekrümmten fokussierenden Elementen, wie Mikrolinsen, die Größe der abzubildenden Mikrostrukturen eingeschränkt ist, und da außerdem stark gekrümmte fokussierende Elemente schwierig zu prägen sind, sind fokussierende Elemente einer geringeren Krümmung bevorzugt. Eine geringe Krümmung bedingt jedoch einen großen Abstand zwischen fokussierendem Element und abzubildender Mikrostruktur, und damit auch eine große Dicke des Sicherheitselement-Folienbands. Gemäß der vorliegenden Erfindung sind derartige Sicherheitselement-Folienbänder problemlos in den Schichtaufbau einer Folienverbundbanknote integrierbar.

Ein Beispiel für die Integration eines Sicherheitselements mit mikrooptischen Sicherheitsmerkmalen in den Schichtaufbau einer Folienverbundbanknote ist in Fig. 5c anhand des Sicherheitselement-Folienbands 30' der Fig. 7 gezeigt. Die Lackschicht 41 des Folienbands 30' ist über die Klebstoffschicht 7 aus Kaschierklebstoff mit der Deckschichtfolie 5 der Banknote 10 verbunden. Die Lackschicht 42 des Folienbands 30' ist über die Klebstoffschicht 6 aus Kaschierklebstoff mit der Deckschichtfolie 4 der Banknote 10 verbunden, wobei jedoch der Kaschierklebstoff nur im Bereich der Mikrohohlspiegel 38 und nicht im Bereich der Mikrolinsen 39 aufgebracht wurde, um die optischen Abbildungseigenschaften der Mikrolinsen 39 nicht nachteilig zu verändern. Hier befindet sich daher ein Bereich 49 ohne Kaschierklebstoff. Alternativ ist es auch möglich, das Folienband 30' vollflächig mit der Deckschichtfolie 4 zu verkleben. Dann muss ein Kaschierklebstoff mit einem geeigneten Brechungszahlunterschied zum Linsenmaterial verwendet werden, so dass die Mikrolinsen im eingesetzten Zustand des Sicherheitselement-Folienbands 30' in die Banknote 10 immer noch eine geeignete Brennweite aufweisen.

Sollen Deckschichtmaterialien verwendet werden, die mit den Brechungsindizes der fokussierenden Elemente unverträgliche Brechungsindizes aufweisen, so kann die entsprechende Deckschichtfolie im Bereich der fokussierenden Elemente entfernt und die fokussierenden Elemente somit freigelegt werden. Wenn die fokussierenden Elemente, beispielsweise die Mikrolinsen, freigelegt werden sollen, kann dies erreicht werden, indem die entsprechende Deckschichtfolie selektiv geschnitten wird, beispielsweise mittels Laser. Durch eine geeignete Ausstattung der Folie mit den fokussierenden Elementen (beispielsweise durch Bedampfung der Ränder mit einer Kupferschicht) kann ein Weiterschneiden verhindert werden. Die Kaschierklebstoffschicht würde im optisch relevanten Bereich ausgespart werden und der Laserschnitt und das Abziehen der Deckschichtfolie würden in diesem Fall vor dem Aushärten der Kaschierklebstoffschicht erfolgen. Der dann in den an die Folie mit den fokussierenden Elementen angrenzenden Randbereichen eventuell freiliegende Kaschierklebstoff kann entweder durch sofortiges Überdrucken mit einem tackfreien System oder durch geeignete Bestrahlung inaktiviert werden. Es ist jedoch bevorzugt, Deckschichtfolien zu verwenden, die die optischen Eigenschaften nicht stören, da die Deckschichtfolien auch eine Schutzfunktion erfüllen.

Alternativ können mikrooptische Sicherheitsmerkmale auch aus Elementen, die sich auf einem Kernschicht-Folienband befinden, und aus Elementen, die sich auf einer Deckschichtfolie befinden, zusammengesetzt werden. Bei der in Fig. 5c gezeigten Folienverbundbanknote 10 könnten sich beispielsweise lediglich die Mikrostrukturelemente 35, 36 auf dem Kernschicht-Folienband befinden, während sich die Mikrohohlspiegel 38 und die Mikrolinsen 39 auf einer Folie befinden, die geeignet gepassert auf die Deckschichtfolie 4 aufgesiegelt oder aufkaschiert ist. Dadurch gewinnt man einen großen Abstand zwischen fokussierenden Elementen und abzubildenden bzw. zu vergrößernden Elementen.

Die vorstehenden Ausführungen sind natürlich nicht als auf die Einbettung speziell des Sicherheitselement-Folienbands 30' in den Schichtverbund einer Folienverbundbanknote 10 beschränkt zu verstehen. Vielmehr können analog beliebige Sicherheitselement-Folienbänder in den Schichtverbund von Wertdokumenten integriert werden.

Bei mikrooptischen Sicherheitselementen bieten sich zahlreiche Variationsmöglichkeiten an. Beispielsweise kann bei einem Sicherheitselement, wie es in Fig. 7 dargestellt ist, der Krümmungsradius der Mikrolinsen 39 so gewählt werden, dass die Brennpunkte der Mikrolinsen 39 und somit der zweite Objektebenenbereich nicht mehr innerhalb des Sicherheitselements 30', sondern in einer Ebene oberhalb der Mikrostrukturelemente 36 liegen. Die Mikrolinsen 39 können in einem solchen Fall zur Selbstverifikation verwendet werden, indem ein drittes Mikrostrukturobjekt, das die Banknote 10 an einer von dem Sicherheitselement 30' beabstandeten Stelle enthält, durch Knicken oder Falten der Banknote 10 vor die Oberseite 34 des Trägers des Sicherheitselements 30' in der Ebene der Brennpunkte der Mikrolinsen 39 positioniert wird, so dass das dritte Mikrostrukturobjekt dann mittels der Mikrolinsen 39 durch die Unterseite 37 hindurch vergrößert abgebildet wird.

Alternativ ist es auch möglich, die Mikrohohlspiegel 38 und die Mikrolinsen 39 in unterschiedlichen Ebenen auszubilden, wie dies in der Schnittdarstellung von Fig. 8 gezeigt ist. Bei dem Sicherheitselement-Folienband 30", das in Fig. 8 dargestellt ist, ist der Aufbau der Schichten 40, 41, 42 ähnlich wie bei dem Sicherheitselement-Folienband 30', das in Fig. 7 dargestellt ist, wobei jedoch anstelle der Mikrolinsen 39 gestrichelt dargestellte geprägte Abschnitte vorgesehen sind, die nicht verspiegelt sind. Außerdem ist auf die Schicht 42 mittels eines Kaschierklebstoffs 45 eine zweite PET-Folie 46 mit einer darauf ausgebildeten UV-Lackschicht 47 aufgeklebt, wobei in der UV-Lackschicht 47 die konvexen Seiten 44 der Mikrolinsen 39, 39' eingeprägt sind. Die konvexen Seiten der Mikrolinsen 39, 39' weisen die Form einer Kugelkalotte auf.

Das in Fig. 8 dargestellte Sicherheitselement 30" weist die Besonderheit auf, dass sich im Bereich der reflektiven Abbildungselemente 38 auch refraktive Abbildungselemente, die Mikrolinsen 39', befinden. Da im Falle einer opaken Beschichtung der Mikrohohlspiegel 38 die Mikrolinsen 39' optisch von den Mikrostrukturen 35 getrennt sind, können die Mikrolinsen 39' in diesem Bereich des Sicherheitselement-Folienbands 30" die ersten Mikrostrukturen 35 nicht abbilden, weshalb diese auch weggelassen werden können. In diesen Bereichen können alternativ andere Prägestrukturen eingesetzt werden, wie beispielsweise Hologramm- oder Mattstrukturen. Die Mikrolinsen 39' über den Mikrohohlspiegeln 38 können als Abbildungselemente für den Mikrohohlspiegel 38 verwendet werden. Zu diesem Zweck kann der Krümmungsradius der Mikrolinsen 39' an den im Vergleich zum Abstand zwischen den Mikrolinsen 39 und Mikrostrukturen 36 im benachbarten Bereich reduzierten Abstand zu den Mikrohohlspiegeln 38 angepasst werden, um eine ausreichend scharfe Abbildung zu gewährleisten. Dann sieht der Betrachter aus Richtung P2 im rechten Bereich des in Fig. 8 gezeigten Sicherheitselements 30" das Sollbild als vergrößerte und gegebenenfalls abgebildete Darstellung der Mikrostrukturen 36. Im linken Bereich hingegen sieht er bei geeigneter Wahl der Raster von Mikrolinsen 39' und Mikrohohlspiegeln 38 eine vergrößerte Darstellung der Mikrohohlspiegel 38.

Gemäß alternativen Ausführungsformen können die fokussierenden Elemente, beispielsweise Mikrohohlspiegel, auch an verschiedenen Seiten des Trägers 33 angeordnet werden, oder es können zwei Träger mittels Kaschierkleber miteinander verklebt werden, so dass ein zusammengesetztes Sicherheitselement entsteht. Ein derartiges zusammengesetztes Sicherheitselement könnte aus zwei Trägern mit Mikrohohlspiegeln 38 und Mikrostrukturelementen 35, wie sie links in Fig. 7 dargestellt sind, bestehen, wobei sich die Kaschierklebstoffschicht zwischen den Mikrohohlspiegeln 38 befindet, so dass die Mikrostrukturelemente 35 jeweils nach außen weisen.

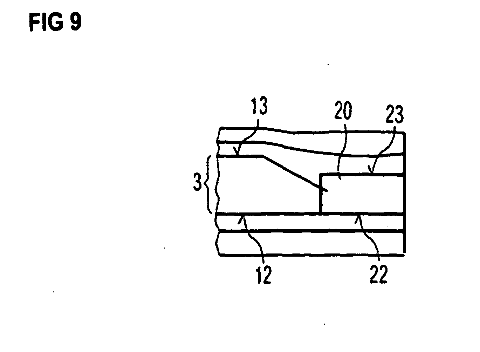

Fig. 9 zeigt einen Schnitt durch eine Folienverbundbanknote, die an einer Kante mit einem Folienband 20 versiegelt ist. Die Folienverbundbanknote kann ausgehend von dem in Fig. 2d gezeigten Folienverbund durch Trennung, z.B. Zerschneiden, der Banknoten voneinander in der Mitte des Folienbands erhalten werden. Die in Fig. 9 gezeigte Folienverbundbanknote ist an der Kante durch das Folienband 20 versiegelt und vor Spaltung besser geschützt als gewöhnliche Verbundbanknoten mit innen liegendem Basispapier und mit darauf angeordneten Abdeckfolien/ Deckschichten.

Die erfindungsgemäßen Wertdokumente mit segmentierter Kernschicht können in einfacher Weise mithilfe geeignet konfektionierter Kernschicht-Folienbänder, die als Endlosmaterial bereitgestellt werden, hergestellt werden. Die Kernschicht-Folienbänder können transparent oder opak sein und weisen bevorzugt Sicherheitsmerkmale auf. Bei der Anordnung der Sicherheitsmerkmale sind natürlich die Abmessungen des Wertdokuments, für das ein Kernschicht-Folienband bestimmt ist, zu berücksichtigen. Die Sicherheitselemente und gegebenenfalls sonstigen Strukturen sind auf dem Folienband in den geeigneten Abständen vorzusehen.

Abschließend sei hier noch einmal erwähnt, dass das zweite Kernschichtmaterial erfindungsgemäß durch die erste und zweite Deckschicht abgedeckt und damit in sehr vorteilhafter Weise vor Korrosion, Manipulation etc. geschützt ist. Auch kann z.B. bei Einsatz der vorstehend erwähnten LEAD-Sicherheitselemente als zweites Kernschichtmaterial auf die sonst üblicherweise erforderlichen Siegellacke verzichtet werden.

## Patentansprüche

1. Wertdokument (1) aufweisend
- eine Kernschicht (3) mit zwei Hauptflächen,
- eine erste Deckschicht (4) und eine erste Klebstoffschicht(6), die die erste Deckschicht vollflächig mit der ersten Hauptfläche der Kernschicht verklebt,
- eine zweite Deckschicht (5) und eine zweite Klebstoffschkht (7), die die zweite Deckschicht vollflächig mit der zweiten Hauptfläche der Kemschicht verklebt,
**dadurch gekennzeichnet, dass** die Kernschicht (3) aus Segmenten aus mindestens einem ersten Kernschichtmaterial (2) und mindestens einem davon verschiedenen zweiten Kernschichtmaterial (20) besteht, die in Flächenrichtung des Wertdokuments dergestalt nebeneinander angeordnet sind, dass sie sich jeweils über die gesamte Länge oder die gesamte Breite des Wertdokuments (1) erstrecken und aneinander angrenzen ohne einander zu überlappen.

2. Wertdokument (1) nach Anspruch 1, **dadurch gekennzeichnet, dass** die erste und/oder die zweite Deckschicht (4, 5) und die sie mit einer Hauptfläche der Kernschicht (3) verklebende erste und/oder zweite Klebstoffschicht (6,7) transparent oder zumindest transluzent sind.

3. Wertdokument (1) nach Anspruch 1 oder 2, **dadurch gekennzeichnet, dass** die Kernschicht (3) mindestens ein Segment aufweist, das aus einem transparenten oder zumindest transluzenten Kunststofffolienband besteht, an das Segmente auf der Basis von Papier angrenzen.

4. Wertdokument (1) nach Anspruch 3, **dadurch gekennzeichnet, dass** das mindestens eine Segment, das aus einem transparenten oder zumindest transluzenten Kunststofffolienband besteht, das Segment aus dem zweiten Kernschichtmaterial (20) ist, und die Segmente auf der Basis von Papier die Segmente aus dem ersten Kernschichtmaterial (2) sind.

5. Wertdokument (1) nach einem der Ansprüche 1 bis 4, **dadurch gekennzeichnet, dass** es eine Folienverbundbanknote ist, bei der
- die Kernschicht (3) mindestens ein Segment aufweist, das aus einem zumindest bereichsweise transparenten oder zumindest transluzenten Kunststofffolienband besteht, an das zwei Segmente auf der Basis von Papier angrenzen,
- die erste und die zweite Deckschicht (4, 5) transparente oder zumindest transluzente Kunststofffolien sind, und
- die erste und die zweite Klebstoffschicht (6, 7) transparent oder zumindest transluzent sind.

6. Wertdokument (1) nach einem der Ansprüche 1 bis 5, **dadurch gekennzeichnet, dass** mindestens eines der Segmente der Kernschicht (3), bevorzugt ein Segment aus zweitem Kernschichtmaterial (20), als ein Sicherheitselement mit Sicherheitsmerkmalen ausgebildet ist.

7. Wertdokument (1) nach einem der Ansprüche 1 bis 6, **dadurch gekennzeichnet, dass** mindestens eines der Segmente der Kernschicht (3) als ein Sicherheitselement mit ersten Komponenten eines Sicherheitsmerkmals ausgebildet ist, und die erste und /oder die zweite Deckschicht (4, 5) mit zweiten und gegebenenfalls weiteren Komponenten des Sicherheitsmerkmals ausgebildet oder ausgestattet ist, wobei die erste und die zweite und gegebenenfalls die weiteren Komponenten gemeinsam das Sicherheitsmerkmal bilden.

8. Wertdokument (1) nach einem der Ansprüche 1 bis 7, **dadurch gekennzeichnet, dass** das Segment aus dem zweiten Kernschichtmaterial (20) als ein Sicherheitselement mit optisch variablen Sicherheitsmerkmalen, bevorzugt mikrooptischen Sicherheitsmerkmalen, ausgebildet ist.

9. Wertdokument (1) nach einem der Ansprüche 1 bis 8, dadurch jekennzeichnet, dass es mindestens eine weitere Schicht aufweist, die als Funkdonsschicht und/oder als Hilfsschicht ausgebildet ist.

10. Wertdokument (1) nach einem der Ansprüche 1 bis 9, **dadurch gekennzeichnet, dass** die Segmente an den Rändern des Wertdokuments, insbesondere an den Kanten und/oder Ecken des Wertdokuments, angeordnet sind.

11. Verfahren zur Herstellung eines Wertdokuments (1), aufweisend eine Kernschicht (3) mit zwei Hauptflächen, eine erste Deckschicht) und eine erste Klebstoffschicht (6), die die erste Deckschicht vollflächig mit der ersten Hauptfläche der Kemschicht verklebt, eine zweite Deckschicht (5) und eine zweite Klebstoffschicht (7), die die zweite Deckschicht vollflächig mit der zweiten Hauptfläche der Kernschicht verklebt, folgende Schritte aufweisend:
- Bereitstellen eines flächigen ersten Deckschichtmaterials für die erste Deckschicht (4) und Auftragen eines ersten Klebstoffs für die erste Klebstoffschicht (6) auf das erste Deckschichtmaterial,
- Bereitstellen eines flächigen ersten Kernschichtmaterials (2), bevorzugt in den Flächenabmessungen des ersten Deckschichtmaterials, und mindestens eines bandförmigen zweiten Kernschichtmaterials (20), das von dem ersten Kernschichtmaterial (2) verschieden ist,
- Zusammenführen des ersten Kernschichtmaterials (2), des zweiten Kemschichtmaterials (20) und des mit dem ersten Klebstoff beschichteten ersten Deckschichtmaterials dergestalt, dass das zweite Kernschichtmaterial (20) zwischen dem ersten Kernschichtmaterial (2) und dem ersten Klebstoff eingeschlossen wird und das erste Kernschichtmaterial (2) und das zweite Kernschichtmaterial (20) mit dem ersten Deckschichtmaterial verklebt werden,
- Abtrennen des ersten Kernschichtmaterials (2) mindestens in den Bereichen, in denen es das zweite Kernschichtmaterial (20) überlappt, so dass eine Oberfläche (23)des zweiten Kernschichtmaterials, nicht aber die erste Klebstoffschicht (6), freigelegt wird, und die Kernschicht (3) gebildet wird, die aus Segmenten aus dem ersten Kernschichtmaterial (2) und mindestens einem Segment aus dem mindestens einen zweiten Kernschichtmaterial (20) zusammengesetzt ist,
- Bereitstellen eines flächigen zweiten Deckschichtmaterials, bevorzugt in den Flächenabmessungen des ersten Deckschichtmaterials, für die zweite Deckschicht (5),
- Auftragen eines zweiten Klebstoffs für die zweite Klebstoffschicht (7) auf das zweite Deckschichtmaterial oder auf die nicht mit dem ersten Deckschichtmaterial verklebte Hauptfläche der Kernschicht (3), und
- Verkleben der Kernschicht (3) mit dem zweiten Deckschichtmaterial mittels des zweiten Klebstoffs.

12. Verfahren nach Anspruch 11, **dadurch gekennzeichnet, dass** das Abtrennen des ersten Kernschichtmaterials (2) durch Abschneiden mit Schneidwerkzeugen (11), bevorzugt Messern, die so eingestellt sind, dass sie beim Schneiden auf die beiden entgegengesetzten Seitenflächen (21) des zweiten Kernschichtnlaterials (20) auftreffen, erfolgt.

13. Verfahren nach Anspruch 12, **dadurch gekennzeichnet, dass** die Neigung der Schneidwerkzeuge (11) so eingestellt wird, dass die Schneidwerkzeuge (11) mit einer zur ersten Deckschicht (4) parallelen Ebene einen spitzen Winkel zwischen 0° und 30° bilden.

14. Verfahren nach Anspruch 12 oder 13, **dadurch gekennzeichnet, dass** das Einstellen der Schneidwerkzeuge (11) durch optisches oder mechanisches Erfassen der Lage des zweiten Kernschichtmaterials (20) und Ansteuerung der Schneidwerkzeuge (11) entsprechend der ermittelten Lage erfolgt.

15. Verfahren nach Anspruch 11, **dadurch gekennzeichnet, dass** das Abtrennen des ersten Kernschichtmaterials (2) durch Abschleifen oder Abfräsen bis zur Freilegung der Oberfläche (23) des zweiten Kernschichtmaterials (20) erfolgt.

16. Verfahren nach einem der Ansprüche 11 bis 15, **dadurch gekennzeichnet, dass** ein Wertdokument nach einem der Ansprüche 1 bis 10 hergestellt wird.

17. Kernschichtfolienband-Endlosmaterial, **dadurch gekennzeichnet, dass** es für die Herstellung eines Wertdokuments gemäß einem der Ansprüche 1 bis 10 konfektioniert ist.

## Claims

1. A value document (1) having
- a core layer (3) with two main areas,
- a first cover layer (4) and a first adhesive layer (6) which bonds the first cover layer over the full area to the first main area of the core layer,
- a second cover layer (5) and a second adhesive layer (7) which bonds the second cover layer over the full area to the second main area of the core layer,
**characterized in that** the core layer (3) consists of segments of at least one first core layer material (2) and at least one second core layer material (20) different therefrom, which are arranged side by side in the areal direction of the value document in such a way that they respectively extend over the entire length or the entire width of the value document (1) and border on each other without overlapping each other.

2. The value document (1) according to claim 1, **characterized in that** the first and/or the second cover layer (4, 5) and the first and/or second adhesive layer (6, 7) bonding them to a main area of the core layer (3) are transparent or at least translucent.

3. The value document (1) according to claim 1 or 2, **characterized in that** the core layer (3) has at least one segment which consists of a transparent or at least translucent plastic foil band, which is bordered by segments on the basis of paper.

4. The value document (1) according to claim 3, **characterized in that** the at least one segment which consists of a transparent or at least translucent plastic foil band is the segment of the second core layer material (20), and the segments on the basis of paper are the segments of the first core layer material (2).

5. The value document (1) according to any of claims 1 to 4, **characterized in that** it is a foil composite bank note in which
- the core layer (3) has at least one segment which consists of a plastic foil band that is transparent or at least translucent at least in certain regions, which is bordered by two segments on the basis of paper,
- the first and the second cover layer (4, 5) are transparent or at least translucent plastic foils, and
- the first and the second adhesive layer (6, 7) are transparent or at least translucent.

6. The value document (1) according to any of claims 1 to 5, **characterized in that** at least one of the segments of the core layer (3), preferably a segment of the second core layer material (20), is configured as a security element with security features.

7. The value document (1) according to any of claims 1 to 6, **characterized in that** at least one of the segments of the core layer (3) is configured as a security element with first components of a security feature, and the first and/or the second cover layer (4, 5) is configured or equipped with second and, if any, further components of the security feature, whereby the first and the second and, if any, the further components together form the security feature.

8. The value document (1) according to any of claims 1 to 7, **characterized in that** the segment of the second core layer material (20) is configured as a security element with optically variable security features, preferably micro-optic security features.

9. The value document (1) according to any of claims 1 to 8, **characterized in that** it has at least one further layer which is configured as a functional layer and/or as an auxiliary layer.

10. The value document (1) according to any of claims 1 to 9, **characterized in that** the segments are arranged at the margins of the value document, in particular at the edges and/or corners of the value document.

11. A method for manufacturing a value document (1) having a core layer (3) with two main areas, a first cover layer (4) and a first adhesive layer (6) which bonds the first cover layer over the full area to the first main area of the core layer, a second cover layer (5) and a second adhesive layer (7) which bonds the second cover layer over the full area to the second main area of the core layer, having the following steps:
- providing an areal first cover layer material for the first cover layer (4) and applying a first adhesive for the first adhesive layer (6) onto the first cover layer material,
- providing an areal first core layer material (2), preferably in the areal dimensions of the first cover layer material, and at least one band-shaped second core layer material (20), which is different from the first core layer material (2),
- bringing together the first core layer material (2), the second core layer material (20) and the first cover layer material coated with the first adhesive in such a way that the second core layer material (20) is enclosed between the first core layer material (2) and the first adhesive, and the first core layer material (2) and the second core layer material (20) are bonded to the first cover layer material,
- detaching the first core layer material (2) at least in those regions in which it overlaps the second core layer material (20), so that there is exposed a surface (23) of the second core layer material, but not the first adhesive layer (6), and there is formed the core layer (3) which is composed of segments of the first core layer material (2) and at least one segment of the at least one second core layer material (20),
- providing an areal second cover layer material, preferably in the areal dimensions of the first cover layer material, for the second cover layer (5),
- applying a second adhesive for the second adhesive layer (7) onto the second cover layer material or onto the main area of the core layer (3), which main area is not bonded to the first cover layer material, and
- bonding the core layer (3) to the second cover layer material by means of the second adhesive.

12. The method according to claim 11, **characterized in that** the detaching of the first core layer material (2) is effected by cutting off with cutting tools (11), preferably knives, which are adjusted such that upon cutting they impinge on the two opposite side areas (21) of the second core layer material (20).

13. The method according to claim 12, **characterized in that** the inclination of the cutting tools (11) is adjusted such that the cutting tools (11) and a plane parallel to the first cover layer (4) form an acute angle between 0° and 30°.

14. The method according to claim 12 or 13, **characterized in that** the adjusting of the cutting tools (11) is effected by optically or mechanically detecting the location of the second core layer material (20) and driving the cutting tools (11) in accordance with the ascertained location.

15. The method according to claim 11, **characterized in that** the detaching of the first core layer material (2) is effected by grinding or milling until the surface (23) of the second core layer material (20) is exposed.

16. The method according to any of claims 11 to 15, **characterized in that** a value document is manufactured according to any of claims 1 to 10.

17. A core-layer foil-band endless material **characterized in that** it is ready-made for the manufacture of a value document according to any of claims 1 to 10.

## Revendications

1. Document de valeur (1) comportant
- une couche noyau (3) comprenant deux faces principales,
- une première couche de recouvrement (4) et une première couche de colle (6) qui colle à pleine face la première couche de recouvrement avec la première face principale de la couche noyau,
- une seconde couche de recouvrement (5) et une seconde couche de colle (7) qui colle à pleine face la seconde couche de recouvrement avec la seconde face principale de la couche noyau,
**caractérisé en ce que** la couche noyau (3) se compose de segments constitués d'au moins un premier matériau de couche noyau (2) et d'au moins un second matériau de couche noyau (20) différent dudit premier matériau, qui sont agencés les uns à côté des autres en direction de la face du document de valeur de telle sorte qu'ils s'étendent respectivement sur toute la longueur ou sur toute la largeur du document de valeur (1) et sont contigus les uns aux autres sans s'entrechevaucher.

2. Document de valeur (1) selon la revendication 1, **caractérisé en ce que** la première et/ou la seconde couche de recouvrement (4, 5) et la première et/ou seconde couche de colle (6, 7) les collant avec une face principale de la couche noyau (3) sont transparentes ou du moins translucides.

3. Document de valeur (1) selon la revendication 1 ou 2, **caractérisé en ce que** la couche noyau (3) comporte au moins un segment constitué d'un ruban de film plastique transparent ou du moins translucide auquel des segments à base de papier sont contigus.

4. Document de valeur (1) selon la revendication 3, **caractérisé en ce que** le au moins un segment constitué d'un ruban de film plastique transparent ou du moins translucide est le segment en le second matériau de couche noyau (20), et les segments à base de papier sont les segments en le premier matériau de couche noyau (2).

5. Document de valeur (1) selon une des revendications de 1 à 4, **caractérisé en ce que** c'est un billet de banque en film composite dans lequel
- la couche noyau (3) comporte au moins un segment constitué d'un ruban de film plastique transparent ou du moins translucide au moins en certaines zones auquel deux segments à base de papier sont contigus,
- la première et la seconde couche de recouvrement (4, 5) sont des films plastiques transparents ou du moins translucides, et
- la première et la seconde couche de colle (6, 7) sont transparentes ou du moins translucides.

6. Document de valeur (1) selon une des revendications de 1 à 5, **caractérisé en ce qu'**au moins un des segments de la couche noyau (3), de préférence un segment en second matériau de couche noyau (20), est réalisé sous forme d'un élément de sécurité comportant des caractéristiques de sécurité.

7. Document de valeur (1) selon une des revendications de 1 à 6, **caractérisé en ce qu'**au moins un des segments de la couche noyau (3) est réalisé sous forme d'un élément de sécurité comprenant des premiers composants d'une caractéristique de sécurité, et **en ce que** la première et/ou la seconde couche de recouvrement (4, 5) est réalisée ou équipée avec des seconds et le cas échéant d'autres composants de la caractéristique de sécurité, le premier et le second et le cas échéant les autres composants constituant ensemble la caractéristique de sécurité.

8. Document de valeur (1) selon une des revendications de 1 à 7, **caractérisé en ce que** le segment constitué du second matériau de couche noyau (20) est réalisé sous forme d'un élément de sécurité comportant des caractéristiques de sécurité optiquement variables, de préférence des caractéristiques de sécurité micro-optiques.

9. Document de valeur (1) selon une des revendications de 1 à 8, **caractérisé en ce qu'**il comporte au moins une autre couche qui est réalisée sous forme de couche fonctionnelle et/ou sous forme de couche auxiliaire.

10. Document de valeur (1) selon une des revendications de 1 à 9, **caractérisé en ce que** les segments sont agencés aux bords du document de valeur, notamment dans les zones des arêtes et/ou des angles du document de valeur.

11. Procédé de fabrication d'un document de valeur (1) qui comporte une couche noyau (3) comprenant deux faces principales, une première couche de recouvrement (4) et une première couche de colle (6) qui colle à pleine face la première couche de recouvrement avec la première face principale de la couche noyau, une seconde couche de recouvrement (5) et une seconde couche de colle (7) qui colle à pleine face la seconde couche de recouvrement avec la seconde face principale de la couche noyau, comprenant les étapes suivantes :
- mise à disposition d'un premier matériau de couche de recouvrement présentant une face pour la première couche de recouvrement (4) et application d'une première colle pour la première couche de colle (6) sur le premier matériau de couche de recouvrement,
- mise à disposition d'un premier matériau de couche noyau (2) présentant une face, de préférence dans les dimensions de face du premier matériau de couche de recouvrement, et au moins d'un second matériau de couche noyau en forme de ruban (20) qui est différent du premier matériau de couche noyau (2).
- jonction du premier matériau de couche noyau (2), du second matériau de couche noyau (20) et du premier matériau de couche de recouvrement revêtu de la première colle, de telle manière que le second matériau de couche noyau (20) est compris entre le, premier matériau de couche noyau (2) et la première colle et que le premier matériau de couche noyau (2) et le second matériau de couche noyau (20) sont collés avec le premier matériau de couche de recouvrement,
- enlèvement du premier matériau de couche noyau (2) au moins dans les zones dans lesquelles il chevauche le second matériau de couche noyau (20), de telle manière qu'une surface (23) du second matériau de couche noyau, mais non la première couche de colle (6), est mise à nu, et la couche noyau (3) est constituée, qui est composée de segments du premier matériau de couche noyau (2) et au moins d'un segment du au moins un second matériau de couche noyau (20).
- mise à disposition d'un second matériau de couche de recouvrement présentant une face, de préférence dans les dimensions de face du premier matériau de couche de recouvrement, pour la seconde couche de recouvrement (5),
- application d'une seconde colle pour la seconde couche de colle (7) sur le second matériau de couche de recouvrement ou sur la face principale de la couche noyau (3) non collée avec le premier matériau de couche de recouvrement, et
- collage de la couche noyau (3) avec le second matériau de couche de recouvrement au moyen de la seconde colle.

12. Procédé selon la revendication 11, **caractérisé en ce que** l'enlèvement du premier matériau de couche noyau (2) a lieu par découpage avec des outils de coupe (11), de préférence des couteaux, qui sont réglés de telle manière que, lors du découpage, ils entrent en impact avec les deux faces frontales (21) opposées du second matériau de couche noyau (20).

13. Procédé selon la revendication 12, **caractérisé en ce que** l'inclinaison des outils de coupe (11) es réglée de telle manière que les outils de coupe (11) forment avec un plan parallèle à la première couche de recouvrement (4) un angle aigu compris entre 0° et 30°.

14. Procédé selon la revendication 12 ou 13, **caractérisé en ce que** le réglage des outils de coupe (11) a lieu par saisie optique ou mécanique de la position du second matériau de couche noyau (20) et par commande des outils de coupe (11) en fonction de la position identifiée.

15. Procédé selon la revendication 11, **caractérisé en ce que** l'enlèvement du premier matériau de couche noyau (2) a lieu par meulage ou fraisage jusqu'à mise à nu de la surface (23) du second matériau de couche noyau (20).

16. Procédé selon une des revendications de 11 à 15, **caractérisé en ce qu'**un document de valeur est fabriqué selon une des revendications de 1 à 10.

17. Matériau de couche noyau se présentant sous forme de ruban de film sans fin, **caractérisé en ce qu'**il est confectionné pour la fabrication d'un document de valeur selon une des revendications de 1 à 10.
